(19) Europäisches Patentamt
European Patent Office
Office européen des brevets

(11) **EP 3 241 011 B1**

(12) **EUROPÄISCHE PATENTSCHRIFT**

(45) Veröffentlichungstag und Bekanntmachung des Hinweises auf die Patenterteilung:
**02.01.2019 Patentblatt 2019/01**

(21) Anmeldenummer: **15795198.9**

(22) Anmeldetag: **18.11.2015**

(51) Int Cl.:
**G01N 9/00** (2006.01) **G01F 1/84** (2006.01)
**G01N 11/04** (2006.01)

(86) Internationale Anmeldenummer:
**PCT/EP2015/076928**

(87) Internationale Veröffentlichungsnummer:
**WO 2016/107693 (07.07.2016 Gazette 2016/27)**

(54) **VERFAHREN ZUM MESSEN EINER DICHTE EINES FLUIDS**

METHOD FOR MEASURING THE DENSITY OF A FLUID

PROCÉDÉ DE MESURE DE DENSITÉ D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.12.2014 DE 102014019396**
**18.06.2015 DE 102015109744**

(43) Veröffentlichungstag der Anmeldung:
**08.11.2017 Patentblatt 2017/45**

(73) Patentinhaber: **Endress+Hauser Flowtec AG**
**4153 Reinach (CH)**

(72) Erfinder:
• **ECKERT, Gerhard**
**79639 Grenzach-Wyhlen (DE)**

• **RIEDER, Alfred**
**84032 Landshut (DE)**
• **ZHU, Hao**
**85354 Freising (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**US-A1- 2007 219 650     US-A1- 2008 229 846**
**US-A1- 2014 060 154**

**Beschreibung**

Die Erfindung betrifft ein Verfahren. zum Messen einer Dichte eines Fluids mittels wenigstens eines zumindest abschnittsweise gekrümmten Meßrohrs, das dafür eingerichtet ist, von nämlichem Fluid durchströmt und währenddessen vibrieren gelassen zu werden.

In der US-A 2008/0229846 bzw. der US-A 20140060154 ist jeweils ein Meßsystem zum Messen wenigstens einer Meßgröße eines strömenden Fluid beschrieben, umfassend einen im Betrieb von zu messendem Fluid durchströmten Meßwandler sowie eine mit nämlichem Meßwandler elektrisch gekoppelte Elektronik, beschrieben, bei welchem Meßsystem der Meßwandler im Betrieb wenigstens eine Meßgröße des Fluids erfasst und wenigstens ein mit nämlicher Meßgröße korrespondierendes Meßsignal liefert, und bei welchem Meßsystem die Meßgerät-Elektronik im Betrieb mittels des wenigstens einen Meßsignals wenigstens einen die wenigstens eine Meßgröße quantitativ repräsentierenden Meßwert generiert. Bei der zu erfassenden Meßgröße kann es sich um eine Viskosität, eine Dichte oder eine Massendurchflußrate des Fluids handeln. Zum Führen von zu messendem Fluid umfasst der Meßwandler jeweilis wenigstens ein zumindest abschnittsweise, beispielsweise im wesentlichen U- oder V-förmig, gekrümmtes Messrohr, das im besonderen dafür eingerichtet ist, von zu messendem Fluid durchströmt und währenddessen vibrieren gelassen zu werden, derart, daß das wenigstens eine Meßrohr zumindest anteilig Nutzschwingungen, beispielsweise nämlich Biegeschwingungen, mit einer von der Dichte des Fluids abhängigen Nutz-Schwingfrequenz ausführt. Mittels wenigstens eines Schwingungssensors werden entsprechende Schwingungsbewegungen des wenigstens einen Meßrohrs punktuell erfaßt und in wenigstens ein zumindest Schwingungen des wenigstens einen Meßrohrs repräsentierendes Schwingungssignal gewandelt, derart, daß das nämliches Schwingungssignal einen mit der Nutz-Schwingfrequenz entsprechend korrespondierenden Signalparameter aufweist. Unter Verwendung des wenigstens einen Schwingungssignals wird weiters wenigstens ein Parameter-Meßwerts für nämlichen Signalparameter ermittelt, derart, daß nämlicher Parameter-Meßwert die Nutz-Schwingfrequenz des wenigstens einen Meßrohrs repräsentiert und basierend auf nämlichen Parameter-Meßwert wird wenigstens ein die Meßgröße quantitativ repräsentierender Meßwert ermittelt.

Das in der US-A 2008/0229846 beschriebene Meßsystem ist zudem dafür eingerichtet, ein Verfahren auszuführen, bei dem zur Kompensation von mit einer durch eine Einbaulage des Meßwandlers einhergehenden Meßfehlern und/oder zur Validierung des wenigstens einen Meßwerts eine Inklination des Meßwandlers, nämlich eine Neigung wenigstens einer, zu einer gedachten Strömungsachse des Meßwandlers beispielsweise auch im wesentlichen senkrechten, Trägheitshauptachse des Meßwandlers gegenüber wenigstens einer gedachten Bezugsachse (g-Achse) ermittelt wird und davon abgeleitet ein Inklinationsmeßwert, der eine Abweichung der ermittelten Inklination vom dafür vorgegebenen Referenzwert quantifiziert, bestimmt wird. Nämlicher Inklinationsmeßwert wird hernach verwendet, um zusammen mit dem vorbezeichneten Parameter-Meßwert in einer nicht näher spezifizierten Weise wenigstens einen Meßwert für eine der vorbezeichneten Meßgrößen zu ermitteln. Zum Erfassen bzw. auch Überwachen der Inklination des Meßwandlers kann das Meßsystem einen Neigungssensor aufweisen. Als Bezugsachse (g-Achse) ist eine in Richtung der Erdbeschleunigung, mithin in Lotrichtung weisende gedachte Fallline gewählt.

Ausgehend vom vorbezeichneten Stand der Technik besteht eine Aufgabe der Erfindung darin, ein verbessertes Verfahren anzugeben, bei dem speziell auch beim Messen der Dichte von Fluiden mittels eines zumindest abschnittsweise gekrümmten Meßrohrs, insb. U- oder V-förmig gekrümmten, gleichwohl von nämlichem Fluid durchströmt und währenddessen vibrieren gelassen Meßrohrs gelegentlich auftretende, von der Einbaulage des Meßrohrs abhängige Meßfehler weiter verringert bzw. bei dem eine gegenüber dem aus dem Stand der Technik bekannten Verfahren weiter verbesserte Meßgenauigkeit beim Messen der Dichte erzielt werden kann.

Zur Lösung der Aufgabe besteht die Erfindung in einem Verfahren zum Messen einer Dichte eines - beispielsweise zumindest zeitweise strömenden - Fluids mittels wenigstens eines zumindest abschnittsweise, beispielsweise U- oder V-förmig, gekrümmten Meßrohrs, das dafür eingerichtet ist, von nämlichem Fluid durchströmt und währenddessen über eine Nutz-Schwinglänge, nämlich eine von einem ersten Rohrende bis zu einem zweiten Rohrende gemessene Rohrlänge, die größer als ein minimaler Abstand nämlichen zweiten Rohrendes von nämlichem ersten Rohrende ist, vibrieren gelassen zu werden. Das erfindungsgemäße Verfahren umfaßt u.a. ein Ermitteln eines Neigungs-Meßwerts, nämlich eines Meßwerts für eine Neigung des wenigstens einen Meßrohrs in statischer Ruhelage relativ zu einer örtlichen Erdbeschleunigung, derart, daß der Neigungs-Meßwert einen Schnittwinkel zwischen einem Richtungsvektor einer gedachten ersten Bezugsachse (y-Achse) und einem Richtungsvektor einer gedachten zweiten Bezugsachse (g-Achse) repräsentiert, beispielsweise einem auf Winkelgrad bezogenen Zahlenwert für nämlichen Schnittwinkel oder einem Zahlenwert für einen Kosinus nämlichen Schnittwinkels entspricht. Nämliche erste Bezugsachse ist so gewählt, daß sie senkrecht auf einer das erste Rohrende und das zweite Rohrende imaginär verbindenden, gedachten dritten Bezugsachse (z-Achse) steht und in Richtung eines am weitesten von nämlicher dritten Bezugsachse entfernten Scheitelpunkts des wenigstens einen Meßrohrs in statischer Ruhelage weist, während nämliche zweite Bezugsachse so gewählt ist, daß sie durch einen gemeinsamen Schnittpunkt der ersten und dritten Bezugsachsen verläuft und in Lotrichtung, nämlich in Richtung der örtlichen Erdbeschleunigung weist. Das erfindungsgemäße Verfahren umfaßt desweiteren ein Strömenlassen von Fluid durch das wenigstens eine Meßrohr und ein Vibrierenlassen nämlichen Meßrohrs, derart, daß das wenigstens eine Meßrohr zumindest anteilig Nutzschwingungen, beispielsweise Biegeschwingungen, mit einer von der Dichte des Fluids abhängigen Nutz-Schwingfrequenz ausführt sowie ein Erzeugen wenigstens eines zumindest Schwingungen des wenigstens einen Meßrohrs repräsentierenden Schwingungssignals, derart, daß das nämliches Schwingungssignal wenigstens einen mit der Nutz-Schwingfrequenz korrespondierenden Signalparameter, beispielsweise nämlich eine der Nutz-Schwingfrequenz entsprechende Signalfrequenz aufweist. Darüberhinaus umfaßt das erfindungsgemäße Verfahren ein Verwenden des wenigstens einen Schwingungssignals zum Ermitteln wenigstens eines Parameter-Meßwerts für nämlichen Signalparameter, derart, daß nämlicher Parameter-Meßwert die Nutz-Schwingfrequenz, $f_N$, des wenigstens einen Meßrohrs repräsentiert sowie ein Verwenden sowohl des wenigstens einen Parameter-Meßwerts als auch des Neigungs-Meßwerts zum Ermitteln wenigstens eines die Dichte des Fluids repräsentierenden Dichte-Meßwerts.

Nach einer ersten Ausgestaltung der Erfindung ist ferner vorgesehen, daß das Ermitteln des Dichte-Meßwerts ein Ermitteln eines Kosinus des Schnittwinkels umfaßt.

Nach einer zweiten Ausgestaltung der Erfindung ist ferner vorgesehen, daß das Ermitteln des Dichte-Meßwerts ein Ermitteln einer Zweierpotenz der Nutz-Schwingfrequenz des wenigstens einen Meßrohrs umfaßt.

Nach einer dritten Ausgestaltung der Erfindung ist ferner vorgesehen, daß das Ermitteln des Dichte-Meßwerts ein Verwenden des wenigstens einen Parameter-Meßwerts zum Ermitteln einer Zweierpotenz der Nutz-Schwingfrequenz des wenigstens einen Meßrohrs umfaßt.

Nach einer vierten Ausgestaltung der Erfindung ist ferner vorgesehen, daß das Ermitteln des Neigungs-Meßwerts ein Messen des Schnittwinkels, beispielsweise in Winkelgrad, umfaßt.

Nach einer fünften Ausgestaltung der Erfindung ist ferner vorgesehen, daß das Ermitteln des Neigungs-Meßwerts ein Ermitteln eines Kosinus des Schnittwinkels umfaßt.

Nach einer sechsten Ausgestaltung der Erfindung ist ferner vorgesehen, daß der Neigungs-Meßwert einem, beispielsweise auf Winkelgrad bezogenen, Zahlenwert für den Schnittwinkel entspricht.

Nach einer siebenten Ausgestaltung der Erfindung ist ferner vorgesehen, daß der Neigungs-Meßwert einem Zahlenwert für einen Kosinus des Schnittwinkels entspricht.

Nach einer achten Ausgestaltung der Erfindung ist ferner vorgesehen, daß das Ermitteln des Neigungs-Meßwerts und das Strömenlassen von Fluid durch das wenigstens eine Meßrohr zeitgleich erfolgen.

Nach einer neunten Ausgestaltung der Erfindung ist ferner vorgesehen, daß das Ermitteln des Neigungs-Meßwerts und das Vibrierenlassen des wenigstens einen Meßrohrs zeitgleich erfolgen.

Nach einer zehnten Ausgestaltung der Erfindung ist ferner vorgesehen, daß am wenigstens einen Meßrohr eine Komponente, beispielsweise eine Spule oder ein Permanentmagnet, eines einem aktiven Anregen von Schwingungen nämlichen Meßrohrs dienlichen elektro-mechanischen, beispielsweise elektro-dynamischen, Schwingungserregers angebracht ist, derart daß die gedachte erste Bezugsachse bzw. eine Verlängerung davon den Schwingungserreger bzw. nämliche Komponente des Schwingungserregers imaginär schneidet.

Nach einer elften Ausgestaltung der Erfindung ist ferner vorgesehen, daß dem wenigstens einen Meßrohr ein lediglich zwei Schwingungsknoten, von denen ein erster Schwingungsknoten im ersten Rohrende und ein zweiter Schwingungsknoten im zweiten Rohrende verortet sind, mithin ein einen einzigen Schwingungsbauch aufweisender Biegeschwingungsgrundmode innewohnt. Diese Ausgestaltung der Erfindung weiterbildend ist ferner vorgesehen, daß die Nutzschwingungen so ausgebildet sind, daß sie Schwingungen des wenigstens einen Meßrohrs in nämlichem Biegeschwingungsgrundmode entsprechen.

Nach einer zwölften Ausgestaltung der Erfindung ist ferner vorgesehen, daß das Ermitteln des wenigstens einen Dichte-Meßwerts das Verwenden sowohl des wenigstens einen Parameter-Meßwerts als auch des Neigungs-Meßwerts zum Ermitteln eines Neigungs-Korrekturwerts umfaßt, derart, daß der Neigungs-Korrekturwert eine Abhängigkeit des Signalparameters sowohl von der Neigung des wenigstens einen Meßrohrs, insb. nämlich von einem Kosinus des Schnittwinkels, als auch einem Gesamt-Gewicht des Meßrohr mit darin befindlichem Fluid repräsentiert. Diese Ausgestaltung der Erfindung weiterbildend ist ferner vorgesehen, daß das Ermitteln des Neigungs-Korrekturwerts ein Ermitteln einer Zweierpotenz der Nutz-Schwingfrequenz des wenigstens einen Meßrohrs, beispielsweise unter Verwendung des wenigstens einen Parameter-Meßwerts, und/oder ein Ermitteln einer vierten Potenz der Nutz-Schwingfrequenz des wenigstens einen Meßrohrs, beispielsweise unter Verwendung des wenigstens einen Parameter-Meßwerts, umfaßt. Alternativ oder in Ergänzung kann das Ermitteln des Neigungs-Korrekturwerts auch ein Ermitteln eines provisorischen Dichte-Meßwerts, der die Dichte des Fluids vorläufig repräsentiert, umfassen, beispielsweise derart, daß der provisorische Dichte-Meßwert bei einem Schnittwinkel von 0° eine Dichte repräsentiert, die kleiner als die Dichte des Fluids ist und/oder daß der provisorische Dichte-Meßwert bei einem Schnittwinkel von 180° eine Dichte repräsentiert, die größer als die Dichte des Fluids ist und/oder daß der provisorische Dichte-Meßwert und der Dichte-Meßwert bei einem Schnittwinkel von 90° gleich sind. Unter Verwendung des Neigungs-Korrekturwerts kann das Ermitteln des Dichte-Meßwerts beispielsweise dadurch erfolgen, indem zunächst eine Zweierpotenz der Nutz-Schwingfrequenz des wenigstens einen Meßrohrs ermittelt und hernach um den Neigungs-Korrekturwert vermindert wird. Desweiteren kann der Neigungs-Korrekturwert in einem, beispielsweise nicht-flüchtigen, Datenspeicher gespeichert werden, etwa um zum Ermitteln des Dichte-Meßwerts nämlichen Neigungs-Korrekturwert aus dem Datenspeicher wieder auszulesen.

Nach einer ersten Weiterbildung des Verfahrens der Erfindung umfaßt diese weiters ein Verbringen des wenigstens einen Meßrohrs in eine statische Ruhelage, beispielsweise derart, daß der Schnittwinkel größer als 0° und/oder kleiner als 180° ist.

Nach einer zweiten Weiterbildung des Verfahrens der Erfindung umfaßt diese weiters ein Speichern des Neigungs-Meßwerts in einem, beispielsweise nicht-flüchtigen, Datenspeicher. Das Verwenden des Neigungs-Meßwerts zum Ermitteln des Dichte-Meßwerts kann dann beispielsweise auch ein Auslesen des Neigungs-Meßwerts aus dem Datenspeicher umfassen.

Nach einer dritten Weiterbildung des Verfahrens der Erfindung umfaßt diese weiters ein Verwenden eines, beispielsweise bezüglich des wenigstens einen Meßrohrs, mithin bezüglich der ersten und dritten Bezugsachsen dauerhaft in einer festen Lagebeziehung stationierten und/oder uniaxialen, nämlich genau eine Meßachse aufweisenden, Neigungssensors zum Ermitteln des Neigungs-Meßwerts. Nämlicher Neigungssensor kann beispielsweise so angeordnet sein, daß eine Meßachse parallel zur ersten Bezugsachse (y-Achse) ist bzw. mit der ersten Bezugsachse koinzidert. Desweiteren kann der Neigungssensor auch zwei oder mehr zueinander senkrechte Meßachsen aufweisen.

Ein Grundgedanke der Erfindung besteht darin, eine aus einer auf das wenigstens einen Meßrohrs wirkenden Schwerkraft resultierende Deformierung des wenigstens einen Meßrohrs bzw. eine damit einhergehende Beeinflussung von dessen Schwingungseigenschaften, nicht zuletzt auch von dessen Resonanzfrequenzen, bei der Ermittlung der Dichte zu berücksichtigen. Wenngleich derartige Deformierungen auch bei gekrümmten Meßrohren eher gering ausfallen, konnte dennoch festgestellt werden, daß die daraus resultierende Meßfehler durchaus nennenswert sein können, mithin zwecks Gewährleistung einer für die Dichtemessung gelegentlich geforderten extrem hohen Meßgenauigkeit von über 99,9% (Meßfehler<0,1%) entsprechend zu korrigieren sind. Überraschenderweise hat es sich hierbei ferner gezeigt, daß das Ausmaß der Beeinflussung der Schwingungseigenschaften des wenigstens eine Meßrohrs durch die Schwerkraft in Kenntnis der Neigung der vorbezeichneten y-Achse gegen die Lotrichtung (g-Achse) ausreichend genau quantifizierbar ist, mithin der vorbezeichnete Meßfehler durch Ermittlung der Neigung der vorbezeichneten y-Achse gegen die Lotrichtung (g-Achse) bereits bestimmbar und dementsprechend korrigierbar ist.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:

Fig. 1 in einer ebenen Seitenansicht ein für die Messung einer Dichte geeignetes Meßsystem in einer horizontalen Einbaulage;

Fig. 2 ein Meßsystem gemäß Fig. 1 mit einem in einer teilweise geschnittenen ebenen Seitenansicht dargestellten Meßwandler;

Fig. 3 ein Meßsystem gemäß Fig. 1 mit einer schematisch nach Art eines Blockschaltbildes dargestellten Elektronik;

Fig. 4 schematisch in einer ebenen, teilweise geschnittenen Seitenansicht einen für ein Meßsystem gemäß Fig. 1 geeigneten Meßwandler in einer ersten geneigten Einbaulage;

Fig. 5 schematisch in einer ebenen, teilweise geschnittenen Seitenansicht einen für ein Meßsystem gemäß Fig. 1 geeigneten Meßwandler in zweiten geneigten Einbaulage; und

Fig. 6 schematisch in einer ebenen, teilweise geschnittenen Seitenansicht einen für ein Meßsystem gemäß Fig. 1 geeigneten Meßwandler in einer dritten geneigten Einbaulage.

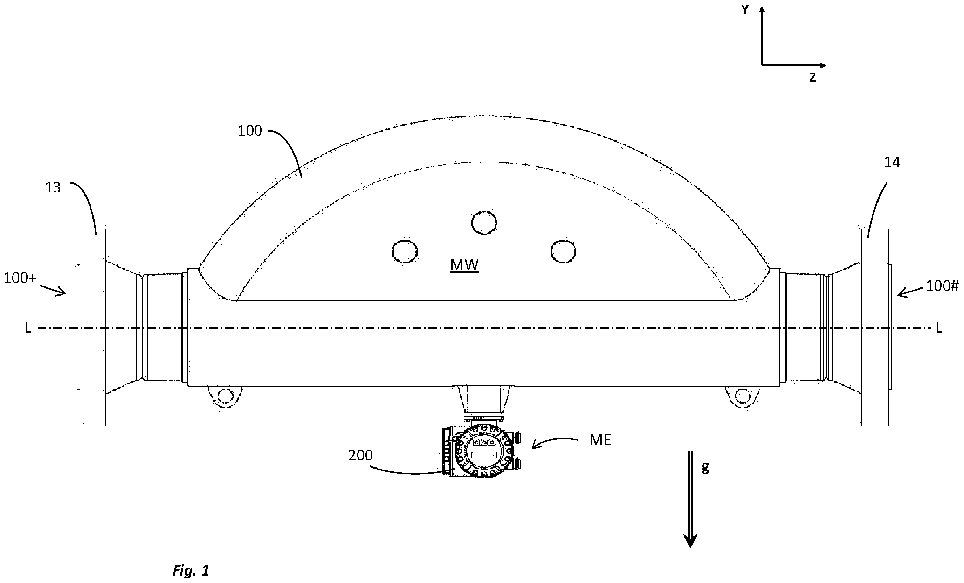

In den Fig. 1, 2 bzw. 3 ist schematisch jeweils ein, insb. für die Verwendung in der industriellen Meß- und Automatisierungstechnik geeignetes, Meßsystem schematisch dargestellt, das dazu dient, eine Dichte $\rho$ eines fließfähigen, mithin in einer Leitung, wie etwa einer Rohrleitung oder einem Gerinne, hindurchführbaren Fluids FL, beispielsweise also einer Flüssigkeit, einem Gas oder einer Dispersion, zu messen, nämlich eine Vielzahl von die Dichte zeitlich aufeinanderfolgend repräsentierenden Dichte-Meßwerten $X_\rho$ zu erzeugen. Das Meßsystem ist jeweils als In-Line-Meßgerät, nämlich ein in den Verlauf einer - hier nicht dargestellten - Rohrleitung einsetzbares Meßsystem realisiert. Das Meßsystem kann demnach beispielsweise auch ein zusätzlich zur Dichte $\rho$ auch eine Massendurchflußrate $\dot{m}$ von strömenden Fluiden messendes Coriolis-Massendurchfluß/Dichte-Meßgerät und/oder ein zusätzlich zur Dichte auch eine Viskosität η messendes Dichte-/Viskositäts-Meßgerät für strömende Fluide sein.

Zum Erfassen der Dichte umfaßt das Meßsystem einen in den Verlauf einer (hier nicht dargestellten) Rohrleitung einfügbaren, im Betrieb vom zu messenden Fluid durchströmten Meßwandler MW vom Vibrationstyp, der wenigstens ein schwingfähig gehaltertes, zumindest abschnittsweise, beispielsweise nämlich U- oder V-förmig, gekrümmtes Meßrohr 10 aufweist, und der - wie aus einer Zusammenschau der Fig. 1, 2 und 3 ohne weiteres ersichtlich - an eine in einem Elektronik-Gehäuse 200 untergebrachte, letztlich die Dichte-Meßwerte $X_\rho$ liefernde Elektronik ME elektrisch angeschlossen ist.

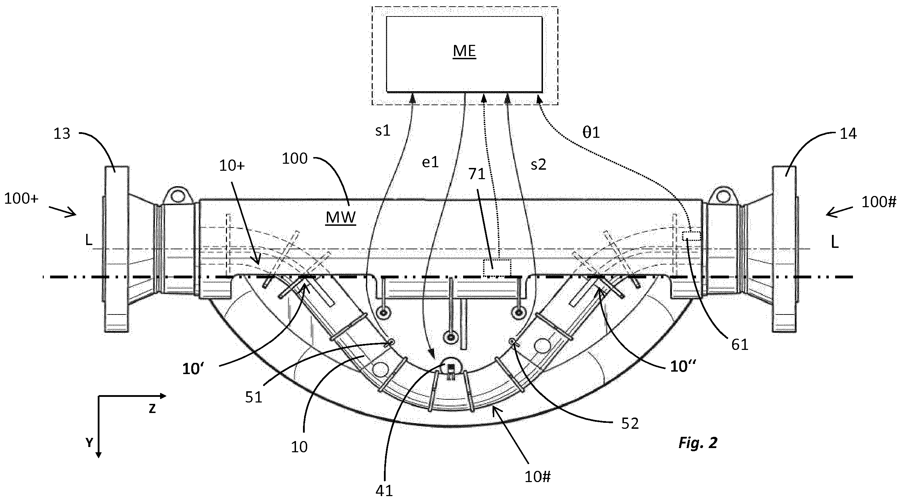

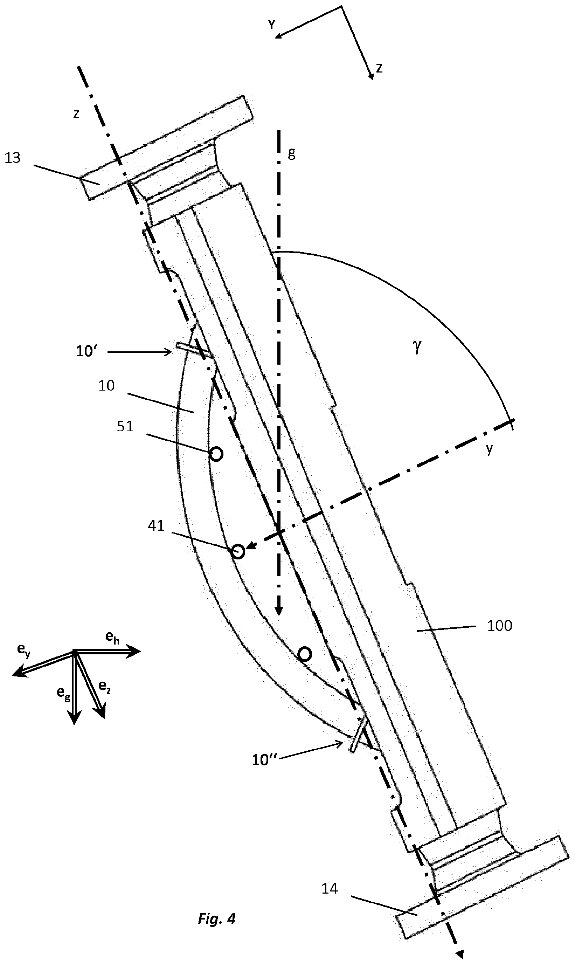

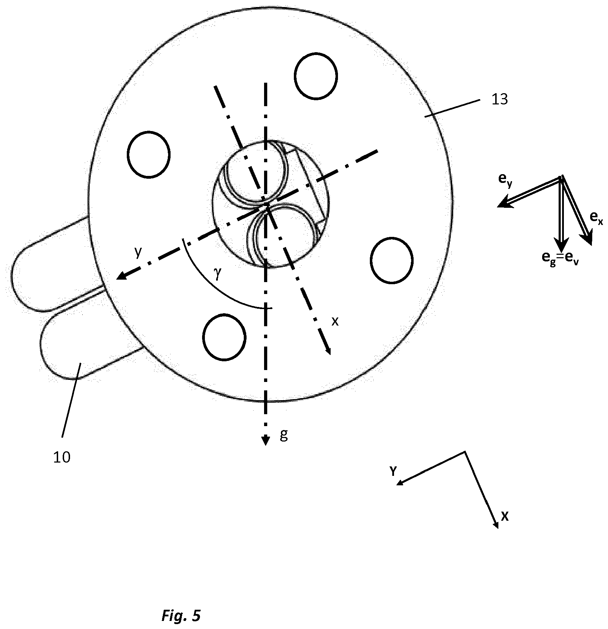

Wie in den Fig. 2 schematisch dargestellt bzw. aus einer Zusammenschau der Fig. 1, 2 und 3 ohne weiteres ersichtlich kann das wenigstens eine Meßrohr 10 beispielsweise auch in einem Meßwandler-Gehäuse 100 untergebracht sein. Für den für einen solchen Meßwandler vom Vibrationstyp typischen Fall, daß nämlicher Meßwandler bzw. dessen wenigstens eines Meßrohr lösbar mit der - beispielsweise als metallische Rohrleitung ausgebildeten - Prozeßleitung zu montieren ist, sind, wie in Fig. 1, 2 und 3 bzw. auch den Fig. 4, 5, und 6 angedeutet bzw. aus deren Zusammenschau ohne weiteres ersichtlich, einlaßseitig (100+) des Meßwandlers einer erster Anschlußflansch 13 für den Anschluß an ein Fluid dem Meßwandler zuführendes Leitungssegment der Prozeßleitung und auslaßseitig (100#) ein zweiter Anschlußflansch 14 für ein Fluid vom Meßwandler abführendes Leitungssegment der Prozeßleitung vorgesehen. Die Anschlußflansche 13, 14 können dabei, wie bei Meßwandlern der beschriebenen Art durchaus üblich auch endseitig in das vorbezeichnete Meßwandlergehäuse 100 integriert sein, mithin ein einlaßseitiges Meßwandlerende 100+ bzw. ein auslaßseitiges Meßwandlerende 100# bilden.

Das wenigstens eine Meßrohr 10 weist ein von einer, beispielsweise aus Metall bestehende, Rohrwand umgebenes Lumen auf und ist im besonderen dafür eingerichtet, in seinem Lumen ein Teilvolumen des Fluid FL zu führen, insb. vom Fluid FL durchströmt zu werden, und währenddessen über eine Nutz-Schwinglänge, nämlich eine von einem ersten Rohrende 10' bis zu einem zweiten Rohrende 10" gemessene Rohrlänge, die (wegen der gewählten Rohrform) größer als ein minimaler Abstand nämlichen zweiten Rohrendes von nämlichem ersten Rohrende 10' ist, vibrieren gelassen zu werden, und zwar in der Weise, daß das Fluid führende Meßrohr 10 zumindest anteilig Nutzschwingungen, nämlich mechanische Schwingungen mit einer Nutz-Schwingfrequenz $f_N$, nämlich einer von der Dichte abhängigen, mithin als Maß für nämliche Dichte dienlichen Schwingfrequenz ausführt, insb. derart, daß das wenigstens eine Meßrohr um eine statische Ruhelage oszilliert. Die Nutz-Schwinglänge des wenigstens einen Meßrohrs entspricht hierbei einer gestreckten Länge eines zwischen dem ersten Rohrende 10' und dem zweiten Rohrende 10" verlaufenden Rohrsegments des wenigstens einen Meßrohrs bzw. einer Länge einer innerhalb von dessen Lumens verlaufenden gedachten Leitkurve (Direktrix) für eine gedachte Kugelschar, die eine das Lumen einhüllende Kanal- bzw. Rohrfläche bildet. Nutz-Schwingfrequenz $f_N$ kann beispielsweise eine einer Resonanzfrequenz $f_r$ des wenigstens eine Meßrohrs bzw. des damit gebildeten Meßwandlers oder einer von einer solchen Resonanzfrequenz abhängigen Frequenz entsprechende Schwingfrequenz sein.

Naturgemäß wohnen dem Meßrohr 10 eine Vielzahl von verschiedenen Schwingungsmoden inne, nicht zuletzt auch ein lediglich zwei Schwingungsknoten, von denen ein erster Schwingungsknoten im ersten Rohrende und ein zweiter Schwingungsknoten im zweiten Rohrende verortet sind, mithin ein einen einzigen Schwingungsbauch aufweisender Biegeschwingungsgrundmode, in dem das wenigstens eine Meßrohr 10 um eine die beiden Rohrenden 10', 10" imaginär miteinander verbindende - hier zu einer gedachten Längsachse L des Meßwandlers zudem im wesentlichen parallele - gedachte Schwingungsachse nach Art eines einseitig eingespannten Auslegers ausgelenkt wird. Gemäß einer weiteren Ausgestaltung der Erfindung sind als Nutzschwingungen Schwingungen des wenigstens einen Meßrohrs in eben diesem Biegeschwingungsgrundmode gewählt bzw. dient als Nutz-Schwingfrequenz $f_N$ eine mit einer Eigenfrequenz nämlichen Biegeschwingungsgrundmode korrespondierende Schwingfrequenz.

Der Meßwandler ist ferner dafür eingerichtet, basierend auf den mechanischen Schwingungen des Meßrohrs 10 wenigstens ein zumindest Schwingungen des wenigstens einen Meßrohrs repräsentierendes Schwingungssignals s1 zu generieren, derart, daß nämliches Schwingungssignal s1 im Falle angeregter Nutzschwingungen wenigstens einen mit der Nutz-Schwingfrequenz $f_N$ korrespondierenden Signalparameter, beispielsweise nämlich eine der Nutz-Schwingfrequenz $f_N$ entsprechende Signalfrequenz $f_1$, aufweist.

Zur Realisierung der Erfindung können neben den in den Ausführungsbeispielen vorgestellten bzw. in den Fig. 2, 4, 5 bzw. 6 gezeigten Meßwandlern beispielsweise auch solche Meßwandler dienen, wie sie u.a. auch in der eingangs erwähnten US-A 2010/0236338, US-A 2010/0242623, US-A 2010/0242624, US-A 56 02 345, US-A 57 96 011, US-B 65 13 393, US-B 68 40 109, US-B 69 20 798 oder US-B 70 17 424, US-B 73 60 451 oder der US-B 66 66 098 vorgeschlagenen sind bzw. wie sie auch den seitens der Anmelderin unter der Typbezeichnung "PROMASS E", "PROMASS F", "PROMASS H", "PROMASS P" oder "PROMASS S" für die Messung von sowohl der Dichte als auch der Massendurchflußrate bzw. des Massendurchflusses strömender Fluide käuflich angeboten werden. Demnach kann der Meßwandler zusätzlich zum Meßrohr 10 beispielsweise wenigstens ein weiteres - insb. baugleiches und/oder zum Meßrohr 10 paralleles - Meßrohr aufweisen, mihin kann der Meßwandler auch mittels zwei oder mehr Meßrohren gebildet sein. Die wenigstens zwei Meßrohre können mittels eines einlaßseitigen Strömungsteilers und eines auslaßseitigen Strömungsteilers, ggf. zusätzlich auch noch mittels ein- und auslaßseitiger Koppelelemente, miteinander mechanisch gekoppelt sein und im Betrieb zum Erzeugen des wenigstens einen Schwingungsmeßsignals zumindest zeitweise vibrieren gelassen werden, etwa frequenzgleich auf einer gemeinsamen Schwingfrequenz, jedoch zueinander gegengleich.

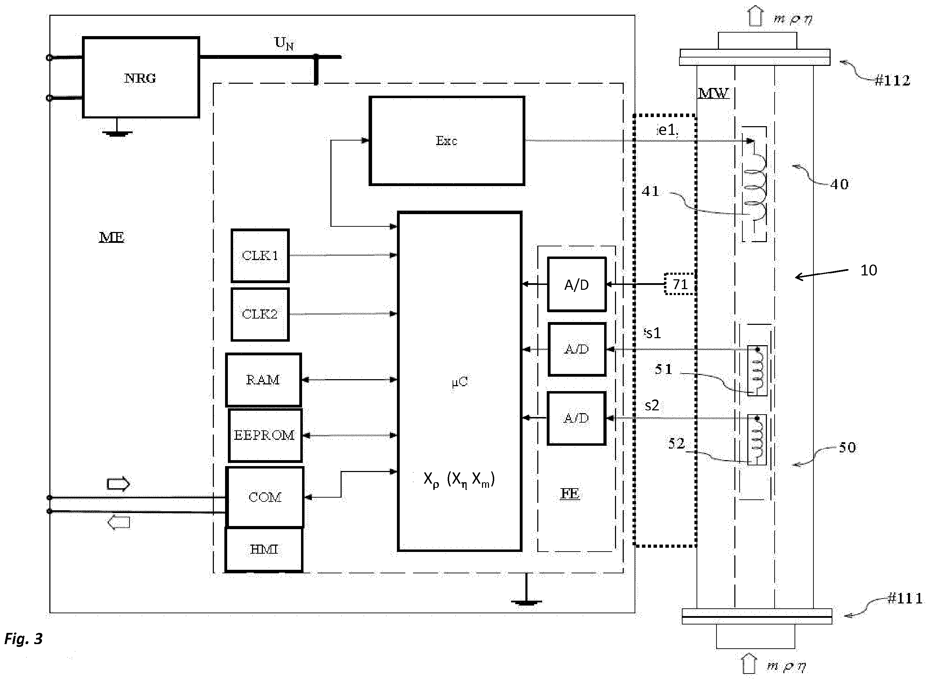

Zum aktiven Anregen von Vibrationen des wenigstens Meßrohrs 10, insb. auch den für die Messung der Dichte benötigten Nutz-Schwingungen, kann der Meßwandler MW ferner wenigstens einen mit dem wenigstens einen Meßrohr 10 in Wirkverbindung stehenden elektro-mechanischen, beispielsweise elektrodynamischen, nämlich mittels Tauchankerspule gebildeten, Schwingungserreger 41 aufweisen. Nämlicher Schwingungserreger dient hierbei im besonderen dazu, eine mittels wenigstens eines elektrischen Treibersignal e1 eingespeiste elektrische Erregerleistung in, z.B. pulsierende oder harmonische, nämlich im wesentlichen sinusförmige, Erregerkräfte zu konvertieren, die entsprechend auf das Meßrohr 10 wirken und somit die gewünschten Nutzschwingungen aktiv anregen. Der Schwingungserreger kann beispielsweise so ausgebildet und angeordnet sein, daß er - wie auch in Fig. 2 dargestellt und bei Meßwandlern der in Rede stehenden Art durchaus üblich - im Bereich eines Scheitelpunkts des wenigstens einen Meßrohrs auf dieses einwirkt bzw. daß die damit erzeugten Erregerkräfte im Bereich nämlichen Scheitelpunkts in das Meßrohr eingeleitet werden. Das vorbezeichnete Treibersignal kann, wie auch in Fig. 3 angedeutet, beispielsweise mittels einer in der Elektronik ME vorgesehenen Treiber-Schaltung Exc bereitgestellt sein. Die - durch Konvertierung von in den wenigstens einen Schwingungserreger 41 eingespeister elektrischer Erregerleistung generierten - Erregerkräfte können in dem Fachmann an und für sich bekannter Weise, mittels der vorbezeichneten Treiberschaltung Exc entsprechend eingestellt werden, etwa mittels in der Treiberschaltung implementierten, eine Amplitude (Stromstärke) eines Stromes des Treibersignals regelnder Strom- und/oder eine Amplitude (Spannungshöhe) einer Spannung des Treibersignals Spannungs-Reglern hinsichtlich ihres Betrags und, z.B. mittels einer in der Treiberschaltung Exc realisierten Phasen-Regelschleife (PLL - *phase locked loop*), hinsichtlich ihrer momentanen Frequenz, vgl. hierzu beispielsweise auch die US-A 48 01 897 oder die US-B 63 11 136. Der Aufbau und die Verwendung vorgenannter Phasenregel-Schleifen zum aktiven Anregen von Meßrohren auf einer bestimmten Nutzfrequenz ist z.B. in der US-A 48 01 897 ausführlich beschrieben. Selbstverständlich können auch andere für das Einstellen der Erregerenergie geeignete, dem Fachmann an und für sich bekannte Treiberschaltungen verwendet werden, beispielsweise auch gemäß der dem eingangs erwähnten Stand der Technik, etwa den eingangs erwähnten US-A 47 77 833, US-A 48 01 897, US-A 48 79 911, US-A 50 09 109, US-A 50 24 104, US-A 50 50 439, US-A 58 04 741, US-A 58 69 770, US-A 60 73 495 bzw. US-A 63 11 136. Ferner sei hinsichtlich einer Verwendung solcher Treiberschaltungen auf die mit Meßumformern der Serie "PROMASS 83" bereitgestellte Elektroniken verwiesen, wie sie von der Anmelderin beispielsweise auch in Verbindung mit auch der Messung der Dichte dienenden Meßwandlern der Serien "PROMASS E", "PROMASS F", "PROMASS H","PROMASS P" bzw. "PROMASS S" angeboten werden. Deren Treiberschaltung ist beispielsweise jeweils zudem auch so ausgeführt, daß Nutzschwingungen auf eine konstante, mithin auch von der Dichte ρ bzw. auch der Viskosität η des jeweils zu messenden Fluids weitgehend unabhängige Amplitude geregelt werden können.

Zum Erzeugen des Schwingungssignals s1 weist der Meßwandler nach einer weiteren Ausgestaltung der Erfindung wenigstens einen, beispielsweise elektrodynamischen, Schwingungssensor 51 auf, der dafür eingerichtet ist, Schwingungsbewegungen des wenigstens einen Meßrohrs zur erfassen und in das Schwingungssignal s1 zu wandeln. Als Schwingungssignal s1 kann beispielsweise eine elektrische Wechselspannung dienen. Der Schwingungssensor 51 kann wie Meßwandlern der in Rede stehenden Art durchaus üblich - vom wenigstens einen Schwingungserreger 41 beabstandet - außen am wenigstens einen Meßrohr angeordnet und dafür eingerichtet sein, daß Schwingungsmeßsignal s1 inform einer mit den Schwingungen korrespondierende elektrischen (Wechsel-)Spannung mit einer von einer Geschwindigkeit der Schwingungen des Meßrohrs abhängigen Amplitude (Spannungshöhe) und einer der Nutzfrequenz $f_N$ entsprechenden Frequenz zu liefern. Im Falle seiner Verwendung in einem Coriolis-Massedurchfluß-Meßgerät kann der Meßwandler ferner einen vom ersten Schwingungssensor 51 in Strömungsrichtung beabstandeten zweiten Schwingungssensor 52 aufweisen, wobei der erste Schwingungssensor beispielsweise einlaßseitig am wenigstens einen Meßrohr plaziert sein kann, während der zweite Schwingungssensor stromabwärts des ersten Schwingungssensor auslaßseitig am wenigstens einen Meßrohr angeordnet ist. Darüberhinaus kann der Meßwandler beispielsweise auch wenigstens einen mit dem wenigstens einen Meßrohr thermisch gekoppelten, beispielsweise darauf aufgeklebten, Temperatursensor 61 zum Erzeugen eines der Korrektur von Temperatureinflüssen auf die Nutzschwingungen bzw. das wenigstens eine Schwingungssignal s1 dienlichen Temperaturmeßsignals θ1 aufweisen.

Das wenigstens eine Schwingungssignal s1 des Meßwandlers ist im weiteren Verlauf der Elektronik ME zugeführt, die u.a. auch dafür eingerichtet ist, unter Verwendung zumindest des wenigstens einen Schwingungssignals s1 wenigstens einen Parameter-Meßwerts $X_f$ für den vorbezeichneten, wenigstens einen mit der Nutz-Schwingfrequenz $f_N$ korrespondierenden Signalparameter zu ermitteln, derart, daß nämlicher Parameter-Meßwert die Nutz-Schwingfrequenz $f_N$ des wenigstens einen Meßrohrs repräsentiert sowie unter Verwendung des Parameter-Meßwerts auch den die Dichte des Fluids repräsentierenden Dichte-Meßwert $X_\rho$ zu ermitteln. Im Falle einer Verwendung in einem Coriolis-Massedurchfluß-Meßgerät kann die Elektronik ME ferner auch dazu dienen, unter Verwendung der vom Meßwandler MW generierten Schwingungsmeßsignale, nämlich anhand einer zwischen den Schwingungsmeßsignalen s1, s2 des ersten und zweiten Schwingungssensors 51, 52 detektierten, durch Corioliskräfte im strömenden Fluid verursachten Phasendifferenz wiederkehrend einen Massendurchfluß-Meßwert $X_m$ zu ermitteln, der eine zu messenden Massen-

durchflußrate, $\dot{m}$, des durch den Meßwandler geführten Fluids repräsentiert. Alternativ oder in Ergänzung dazu kann die Meß- und Auswerteschaltung, wie bei Meßsystemen der in Rede stehenden Art durchaus üblich, ggf. auch dazu verwendet werden, basierend auf der eingespeisten elektrischer Erregerleistung sowie dem wenigstens einen Schwingungsmeßsignal s1 einen eine Viskosität $\eta$ des Fluids repräsentierenden Viskositäts-Meßwert $X_\eta$ zu ermitteln, vgl. hierzu auch die eingangs erwähnten US-B 72 84 449, US-B 70 17 424, US-B 69 10 366, US-B 68 40 109, US-A 55 76 500 oder US-B 66 51 513. Zur Auswertung der vom Meßwandler gelieferten Signale bzw. zum Generieren der vorbezeichneten Meßwerte ($X_f$, $X_\rho$,...) kann die Elektronik ME, wie auch in Fig. 3 schematisch dargestellt, ferner eine, beispielsweise mittels wenigstens eines Mikroprozessors und/oder mittels eines digitalen Signalprozessors (DSP) gebildete, Meß- und Auswerte-Schaltung $\mu$C aufweisen. Jedes der vom Meßwandler generierten Schwingungsmeßsignale kann dabei auch mittels einer ebenfalls in der Elektronik ME vorgesehenen, der eigentlichen Meß- und Auswerteschaltung $\mu$C vorgeschalteten Eingangsschaltung FE zunächst vorverarbeitet, insb. vorverstärkt, gefiltert und digitalisiert, zu werden und hernach inform eines Digitalsignals an die Meß- und Auswerte-Schaltung $\mu$C entsprechend weitergegeben werden. Die Programm-Codes für solche der Generierung von Meßwerten, nicht zuletzt auch den Dichte-Meßwerten, dienende Auswerteprogramme bzw. für der Ansteuerung des Meßwandlers dienende Regelungsprogramme können z.B. in einem nicht-flüchtigen Datenspeicher EEPROM der Elektronik ME persistent gespeichert sein und beim Aufstarten der Elektronik in einen, z.B. im Prozessor integrierten, flüchtigen Datenspeicher RAM geladen werden. Gleichermaßen können mittels der Elektronik ME im Betrieb generierte Meßwerte in einen solchen, ggf. auch denselben, flüchtigen bzw. in einen solchen nicht-flüchtigen Datenspeicher geladen und für eine spätere Weiterverarbeitung entsprechend vorgehalten werden.

Mittels der Elektronik ME generierte Meßwerte, nicht zuletzt mittels der Elektronik ME generierte Dichte-Meßwerte $X_\rho$, aber auch ggf. generierte Massendurchfluß-Meßwerte $X_m$ bzw. Viskositäts-Meßwerte $X_\eta$, können beispielsweise auch vor Ort angezeigt werden. Zum Visualisieren nämlicher, Meßsystem intern erzeugter Meßwerte und/oder ggf. Meßsystem intern generierter Systemstatusmeldungen, wie etwa einer Fehlermeldung oder einem Alarm, vor Ort kann das Meßsystem, wie auch Fig. 3 angedeutet, ferner ein mit der Elektronik kommunizierendes, ggf. auch portables, Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, beispielsweise auch fernparametrierbare, Elektronik ME ferner so ausgelegt sein, daß sie im Betrieb des Meßsystems mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meß- und/oder Systemdiagnosewerte oder der Steuerung des Meßsystems dienende Einstellwerte. Des weiteren kann die Elektronik ME so ausgelegt sein, daß sie von einer externen Energieversorgung, beispielsweise auch über das vorgenannte Feldbussystem, gespeist werden kann. Für den Fall, daß das Meßsystem für eine Ankopplung an ein Feldbus- oder ein anderes Kommunikationssystem vorgesehen ist, kann die, beispielsweise auch vor Ort und/oder via Kommunikationssystem (re-)programmierbare, Elektronik ME zu dem eine entsprechende Kommunikations-Schnittstelle für eine Datenkommunikation aufweisen, z.B. zum Senden von Meß- und/oder Betriebsdaten, mithin die wenigstens eine Meßgröße repräsentierenden Meßwerte, an die bereits erwähnte speicherprogrammierbare Steuerung oder ein übergeordnetes Prozeßleitsystem und/oder zum Empfangen von Einstelldaten für das Meßsystem. Nicht zuletzt für den Fall, daß das Meßsystem für eine Ankopplung an ein Feldbus- oder ein anderes Kommunikationssystem vorgesehen ist, kann die Elektronik ME ferner eine für eine Datenkommunikation gemäß einem der einschlägigen Industriestandards ausgebildete Kommunikations-Schnittstelle COM aufweisen. Darüberhinaus kann die Elektronik ME beispielsweise eine solche interne Energieversorgungsschaltung NRG aufweisen, die im Betrieb von einer im vorgenannten Datenverarbeitungssystem vorgesehen externen Energieversorgung über das vorgenannte Feldbussystem gespeist wird. Hierbei kann die Elektronik ferner z.B. so ausgebildet sein, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann; das Meßsystem kann aber beispielsweise auch als sogenanntes Vierleiter-Meßgerät ausgebildet sein, bei dem die interne Energieversorgungsschaltung NRG der Elektronik ME mittels einem ersten Paars Leitungen mit einer externen Energieversorgung und die interne Kommunikationsschaltung COM der Elektronik ME mittels eines zweiten Paars Leitungen mit einer externen Datenverarbeitungsschaltung oder einem externen Datenübertragungssystem verbunden ist. Die Elektronik ME kann ferner- wie auch schematisch dargestellt - in einem entsprechenden, beispielsweise schlag- und/oder auch explosionsfest und/oder hermetisch dicht ausgebildeten und/oder modular aufgebauten, Elektronik-Gehäuse 200 untergebracht sein. Das Elektronik-Gehäuse 200 kann beispielsweise vom Meßwandler entfernt angeordnet oder, wie in Fig. 1 gezeigt, unter Bildung eines einzigen Kompaktgeräts direkt am Meßwandler MW, beispielsweise von außen am Wandler-Gehäuse 100 fixiert sein, beispielsweise unter Verwendung eines am Wandler-Gehäuse 100 angebrachten halsartigen Anschlußstutzen. Innerhalb des Anschlußstutzens kann ferner eine, beispielsweise mittels Glas- und/oder Kunststoffverguß hergestellte, hermetisch dichte und/oder druckfeste Durchführung für elektrische Verbindungsleitungen zwischen elektrischen Komponenten des Meßwandlers MW und der Elektronik ME angeordnet sein.

Das Meßsystem ist erfindungsgemäß ferner dafür eingerichtet, mithin ist das damit realisierte Verfahren zur Messung der Dichte erfindungsgemäß ferner so ausgestaltet, daß zum Ermitteln des Dichte-Meßwerts $X_\rho$ außer dem die Nutzfrequenz des wenigstens einen Schwingungsmeßsignals s1 repräsentierenden wenigstens einen Parameter-Meßwert zusätzlich auch ein Neigungs-Meßwert $X_\gamma$ nämlich ein Meßwert für eine Neigung des wenigstens einen Meßrohrs in statischer Ruhelage relativ zu einer, beispielsweise 9,8 m·s$^{-2}$ betragenden bzw. mit 9,8 m·s$^{-2}$ angesetzten, örtlichen Erdbeschleunigung ermittelt und in die Berechnung des Dichte-Meßwerts einfließen gelassen wird, derart, daß sowohl der wenigstens eine Parameter-Meßwerts als auch der Neigungs-Meßwerts zum Ermitteln wenigstens eines die Dichte des Fluids repräsentierenden Dichte-Meßwerts $X_\rho$. verwendet werden. Nämlicher Neigungs-Meßwert $X_\gamma$ ist erfindungsgemäß so bestimmt, daß dieser einen - beispielsweise auch in den Fig. 4, 5 und 6 jeweils entsprechend veranschaulichten - Schnittwinkel $\gamma$ zwischen einem Richtungsvektor $\mathbf{e_y}$ einer gedachten ersten Bezugsachse y (y-Achse) und einem Richtungsvektor $\mathbf{e_g}$ einer gedachten zweiten Bezugsachse g (g-Achse) repräsentiert. Die erste Bezugsachse ist hierbei so gewählt, daß sie senkrecht auf einer das erste Rohrende und das zweite Rohrende imaginär verbindenden, gedachten dritten Bezugsachse z (z-Achse) steht und in Richtung eines am weitesten von nämlicher dritten Bezugsachse z entfernten Scheitelpunkts des wenigstens einen Meßrohrs in statischer Ruhelage weist. Die vorbezeichnete zweite Bezugsachse g wiederum verläuft durch einen gemeinsamen Schnittpunkt der ersten und dritten Bezugsachsen und weist in Lotrichtung ($\mathbf{e_g}$ = $\mathbf{g}$/g), nämlich in Richtung der örtlichen Erdbeschleunigung $\mathbf{g}$. Der Schnittwinkel $\gamma$ kann hierbei in von 0° bis 180° reichenden Meßintervall liegen, mithin größer als 0° bzw. kleiner als 180° sein. Gemäß einer weiteren Ausgestaltung der Erfindung ist am wenigstens einen Meßrohr eine Komponente, beispielsweis also eine Spule oder ein Permanentmagnet, des vorbezeichneten, dem aktiven Anregen von Schwingungen des wenigstens einen Meßrohrs dienlichen elektro-mechanischen Schwingungserregers so angebracht, daß die gedachte erste Bezugsachse bzw. eine Verlängerung davon den Schwingungserreger bzw. nämliche Komponente des Schwingungserregers imaginär schneidet.

Durch die Ermittlung und Verwendung des vorbezeichneten Neigungs-Meßwerts ist es ermöglicht, eine Abhängigkeit des Signalparameters von der vorbezeichneten Neigung des wenigstens einen Meßrohrs wie auch einem Gesamt-Gewicht des Meßrohr mit darin befindlichem Fluid bei der Ermittlung der Dichte, nämlich ein von dieser Neigung bzw. dem vorbezeichneten Schnittwinkel $\gamma$ abhängige Deformierung des wenigstens einen Meßrohrs unter dem Einfluß der darauf wirkenden Schwerkraft zu berücksichtigen bzw. entsprechend zu korrigieren. Der Neigungs-Meßwert $X_\gamma$ kann hierfür beispielsweise so ermittelt werden, daß er einem auf Winkelgrad bezogenen Zahlenwert für nämlichen Schnittwinkel entspricht, beispielsweise also eine ein Skalarprodukt $\mathbf{e}_y \circ \mathbf{e}_g$ (inneres Produkt) der beiden Richtungsvektoren $\mathbf{e}_y$, $\mathbf{e}_g$ enthaltende Berechnungsvorschrift:

$$\cos X_\gamma = \frac{\mathbf{e_y} \circ \mathbf{e_g}}{|\mathbf{e_y}| \cdot |\mathbf{e_g}|} \tag{1}$$

erfüllt, bzw. daß der Neigungs-Meßwert $X_\gamma$ einem Zahlenwert für einen Kosinus nämlichen Schnittwinkels entspricht, beispielsweise also eine Berechnungsvorschrift:

$$X_\gamma = \frac{\mathbf{e_y} \circ \mathbf{e_g}}{|\mathbf{e_y}| \cdot |\mathbf{e_g}|} \tag{2}$$

erfüllt. Dementsprechend umfaßt nach einer weiteren Ausgestaltung der Erfindung das Ermitteln des Neigungs-Meßwerts, mithin das Ermitteln des Dichte-Meßwerts ein Ermitteln eines Kosinus cos $\gamma$ des Schnittwinkels $\gamma$ bzw. ein Ermitteln des Schnittwinkels in Winkelgrad.

Unter Berücksichtigung einer weiteren gedachten, nämlich einer gedachten vierten Bezugsachse x (x-Achse), die sowohl senkrecht auf der gedachten Bezugsachse y (y-Achse) als auch senkrecht auf der gedachten Bezugsachse z (z-Achse) steht, bzw. einem Richtungsvektor $\mathbf{e_x}$ nämlicher Bezugsachse x kann der Schnittwinkel $\gamma$ ferner auch basierend auf einer Berechnungsvorschrift:

$$\cos X_\gamma = \frac{\mathbf{e_z} \circ \mathbf{e_h}}{|\mathbf{e_z}| \cdot |\mathbf{e_h}|} \cdot \frac{\mathbf{e_y} \circ \mathbf{e_v}}{|\mathbf{e_y}| \cdot |\mathbf{e_v}|} \tag{3}$$

bzw. einer Berechnungsvorschrift:

$$X_\gamma = \frac{\mathbf{e}_z \circ \mathbf{e}_h}{|\mathbf{e}_z| \cdot |\mathbf{e}_h|} \cdot \frac{\mathbf{e}_y \circ \mathbf{e}_v}{|\mathbf{e}_y| \cdot |\mathbf{e}_v|} \tag{4}$$

ermittelt werden, worin ein Richtungsvektor $\mathbf{e}_h$ eine ein Kreuzprodukt $\mathbf{e}_z \times \mathbf{e}_g$ (äußeres Produkt) der beiden Richtungs-vektoren $\mathbf{e}_z$, $\mathbf{e}_g$ enthaltende Berechnungsvorschrift:

$$\mathbf{e}_h = \frac{\mathbf{e}_g \times (\mathbf{e}_z \times \mathbf{e}_g)}{|\mathbf{e}_g \times (\mathbf{e}_z \times \mathbf{e}_g)|} = \frac{\mathbf{e}_g \times (\mathbf{e}_z \times \mathbf{e}_g)}{|\mathbf{e}_g| \cdot |\mathbf{e}_z \times \mathbf{e}_g|} \tag{5}$$

erfüllt, mithin einer Rotation der gedachten zweiten Bezugsachse g um -90° innerhalb einer durch nämliche Bezugsachse g und die gedachte dritte Bezugsachse z imaginär aufgespannte, gedachte Projektionsebene (gz) bzw. einem Verdrehen der Bezugsachse g in nämlicher Projektionsebene in eine Horizontallage entspricht, und ein Richtungsvektor $\mathbf{e}_v$ eine Berechnungsvorschrift

$$\mathbf{e}_v = \frac{\mathbf{e}_g \circ \mathbf{e}_x}{|\mathbf{e}_x|^2} \cdot \mathbf{e}_x + \frac{\mathbf{e}_g \circ \mathbf{e}_y}{|\mathbf{e}_y|^2} \cdot \mathbf{e}_y \tag{6}$$

erfüllt, mithin einer Orthogonalprojektion der zweiten Bezugsachse g auf eine durch die gedachte erste Bezugsachse y und die gedachte vierte Bezugsachse x imaginär aufgespannte, gedachte Projektionsebene (xy) entspricht. Dementsprechend kann also der gesuchte Schnittwinkel $\gamma$ bzw. der diesen repräsentierende Neigungs-Meßwert $X_\gamma$ beispiels-weise auch als ein Produkt eines Kosinus eines Schnittwinkels $\eta$ (cos $\eta$) zwischen dem Richtungsvektor $\mathbf{e}_z$ der gedachten dritten Bezugsachse z und dem vorbezeichneten, durch die Lage der gedachten dritten Bezugsachse z relativ zur zweiten Bezugsachse g definierten Richtungsvektor $\mathbf{e}_h$ multipliziert mit einem Kosinus eines Schnittwinkels $\zeta$ (cos $\zeta$) zwischen dem Richtungsvektor $\mathbf{e}_y$ der gedachten ersten Bezugsachse y und dem vorbezeichneten, durch die Lage der gedachten ersten und vierten Bezugsachse relativ zur gedachten zweiten Bezugsachse g definierten Richtungsvektor $\mathbf{e}_v$ berechnet werden (cos $\gamma$ = cos $\eta$ cos $\zeta$).

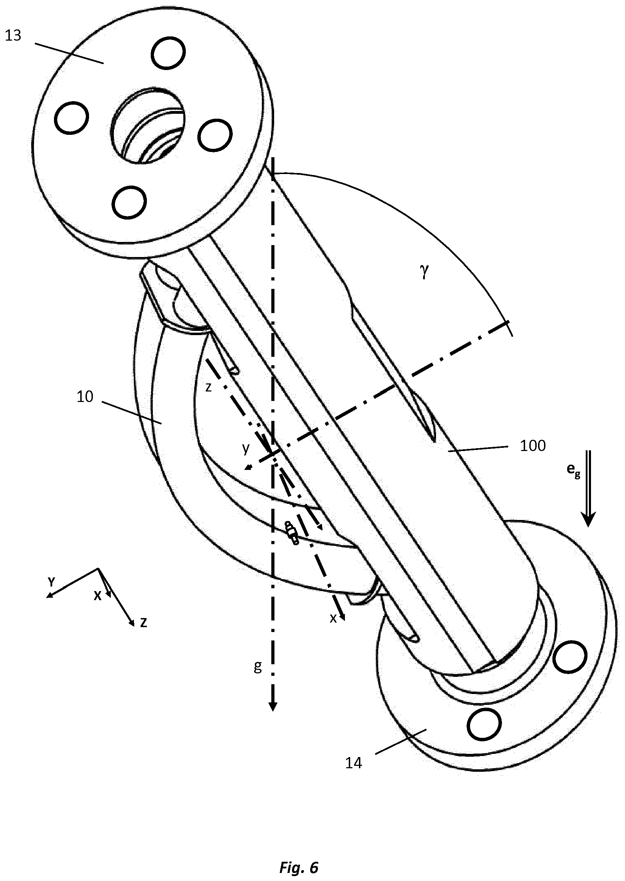

Der Neigungs-Meßwert kann beispielsweise anhand von die vorbezeichnete Einbaulage festlegenden Planungsdokumenten, ggf. auch seitens des Herstellers des Meßsystems, ermittelt und entsprechend in der Elektronik hinterlegt werden. Alternativ oder in Ergänzung kann das Ermitteln des Neigungs-Meßwerts aber auch ein Messen des Schnittwinkels umfassen, beispielsweise nämlich ein Einmessen vor Ort nachdem der Meßwandler in die endgültige Einbaulage, mithin das wenigstens eine Meßrohr in dessen statische Ruhelage verbracht worden sind. Das Messen des Schnittwinkels kann dann beispielsweise mittels eines Neigungsmesser vollzogen werden, etwa indem der - beispielsweise auch elektronische bzw. digitale - Neigungsmesser von außen entsprechend an das vorbezeichnete Meßwandler-Gehäuse 100 bzw. an daran vorgesehene, den Verlauf der Bezugsachse y (y-Achse) und/oder den Verlauf der Bezugsachsen x, y repräsentierende Bezugsmarkierung entsprechend angelegt oder indem der Neigungsmesser, wie z.B. in der WO-A 2013/092105 vorgeschlagen, vorübergehend am Elektronik-Gehäuse befestigt und zugleich mit der Elektronik verbunden wird, beispielsweise über eine in der Elektronik ggf. vorgesehene Service-Schnittstelle. Ein mittels des Neigungsmesser ermittelter Zahlenwert für die gemessene Neigung bzw. die für die jeweilige Bezugsachse jeweils gemessene Ausrichtung kann hernach entsprechend an die Elektronik übermittelt werden, beispielsweise durch manuelle Eingabe via Anzeige- und Bedienelement HMI bzw. durch Datenübertragung via Kommunikationsschaltung COM oder über die vorbezeichnete Service-Schnittstelle. Alternativ oder in Ergänzung kann das Meßsystem aber beispielsweise auch mit einem eigenen Neigungssensor 61 ausgerüstet sein, der im Meßsystem - beispielsweise nämlich innerhalb des Elektronik-Gehäuses 200 oder auch innerhalb des Meßwandler-Gehäuses 100 oder aber beispielsweise auch innerhalb des erwähnten Anschlußstutzens - angeordnet und mit der Elektronik unter Bildung eines "bordeigenen" Neigungsmessers elektrisch gekoppelt ist, und kann dementsprechend die Ermittlung des Neigungs-Meßwerts unter Verwendung nämlichen Neigungssensors 71 erfolgen. Der - beispielsweise auch ein bereits den Kosinus cos $\gamma$ des Schnittwinkels $\gamma$ repräsentierendes Sensorsignal bzw. den Kosinus cos $\gamma$ des Schnittwinkels $\gamma$ repräsentierende digitale Meßwerte liefernde - Neigungssensor 71 kann dafür in vorteilhafter Weise so befestigt sein, daß er bezüglich des wenigstens einen Meßrohrs 10, mithin bezüglich der ersten und dritten Bezugsachsen dauerhaft in einer festen Lagebeziehung stationiert ist, etwa derart, daß eine Meßachse des Neigungssensor 71 parallel zur ersten Bezugsachse (y-Achse) ist bzw. mit der ersten Bezugsachse (y-Achse) koinzidiert. Bei dem Neigungssensor 71 kann es sich beispielsweise um einen uniaxialen, nämlich genau eine Meßachse aufweisenden, Neigungssensor handeln; gleichwohl kann der Neigungssensor 71 aber auch zwei oder mehr zueinander senkrechte Meßachsen aufweisen. Bei eingebautem Meßsystem - nicht zuletzt einem solchen mit einer der in Fig. 6 gezeigten Einbaulage in etwa entsprechenden bzw. vergleichbaren Einbaulage - kann die tatsächliche Ausrichtung der vorbezeichneten Richtungsvektoren $\mathbf{e_h}$ und $\mathbf{e_v}$ gelegentlich, nicht zuletzt bei Verzicht auf einen elektronischen Neigungssensor bzw. einen bordeigenen Neigungsmesser, einfacher ermittelt werden, als die Lage der Bezugsachse y. Dementsprechend kann die Ermittlung des Neigungswerts vor Ort gelegentlich auch dadurch vollzogen werden, indem zunächst die beiden Schnittwinkel $\eta$, $\zeta$ ermittelt und in die Elektronik des Meßsystems entsprechend eingegeben werden, beispielsweise via Anzeige- und Bedienelement HMI, und hernach mittels der Elektronik der gesuchte Schnittwinkel $\gamma$ bzw. der Neigungs-Meßwert $X_\gamma$ basierend auf einer der vorbezeichneten Berechnungvorschriften (3) bzw. (4) und anhand der beiden Schnittwinkel $\eta$, $\zeta$ berechnet wird.

Der - auf welche Weise auch immer ermittelte - Neigungs-Meßwert $X_\gamma$ kann in vorteilhafter Weise desweiteren in einem in der Elektronik ME ggf. vorgesehenen Datenspeicher gespeichert werden, beispielsweise auch dauerhaft in dem vorbezeichneten nicht-flüchtigen Datenspeicher (EEPROM) der Elektronik ME. Dadurch ist es beispielsweise auch ermöglicht, den Neigungs-Meßwert $X_\gamma$ vorab zu ermitteln, etwa vor Ort im Zuge einer Inbetriebnahme des jeweiligen Meßgräts, und hernach dadurch zum Ermitteln des Dichte-Meßwerts $X_\rho$ zu verwenden, indem der Neigungs-Meßwert aus dem Datenspeicher wieder ausgelesen wird. Das Ermitteln des Neigungs-Meßwerts $X_\gamma$ und das Strömenlassen von Fluid durch das wenigstens eine Meßrohr wie auch das Ermitteln des Neigungs-Meßwerts $X_\gamma$ und das Vibrierenlassen des wenigstens einen Meßrohrs können hierbei ohne weiteres aber auch jeweils zeitgleich erfolgen, mithin kann der Neigungs-Meßwerts $X_\gamma$ im Betrieb des Meßsystems auch wiederkehrend ermittelt werden.

Die Ermittlung der Dichte kann beispielsweise in der Weise erfolgen, indem zunächst ein provisorischer Dichte-Meßwerts $X_{\rho\_prov}$ ermittelt wird, der die Dichte des Fluids lediglich vorläufig repräsentiert und nämlicher provisorischer Dichte-Meßwerts $X_{\rho\_prov}$ hernach unter Verwendung eines basierend auf dem Neigungs-Meßwert $X_\gamma$ im Betrieb des Meßsystems wiederkehrend ermittelten Neigungs-Korrekturwerts $X_{korr}$ in den jeweiligen Dichte-Meßwert $X_\rho$ umgerechnet wird, wobei nämlicher Neigungs-Korrekturwert $X_{korr}$ eine Abhängigkeit *Err*$_f$ des Signalparameters sowohl von der Neigung des wenigstens einen Meßrohrs, beispielsweise nämlich von einem Kosinus des Schnittwinkels, als auch einem Gesamt-Gewicht des wenigstens einen Meßrohrs mit darin befindlichem Fluid bzw. einen daraus resultierend im provisorischen Dichte-Meßwert $X_{\rho\_prov}$ enthaltenen Meßfehler repräsentiert. Der provisorische Dichte-Meßwert $X_{\rho\_prov}$ und der Neigungs-Korrekturwerts $X_{korr}$ können beispielsweise so berechnet werden, daß unter deren Verwendung der Dichte-Meßwert hernach in einfacher Weise basierend auf einer Berechnungsvorschrift:

$$X_\rho = X_{\rho\_prov} + X_{korr} \, ,$$

(7)

mithin einer einen Berechnungsterm:

$$c_0 + \frac{c_1}{X_f^2} + X_{korr}$$

(8)

enthaltenden Berechnungsvorschrift ermittelt werden kann. Der vorbezeichnete provisorische Dichte-Meßwert $X_{\rho\_prov}$ wiederum kann beispielsweise einem konventionell ermittelten Dichte-Meßwert, beispielsweise also einem Dichte-Meßwert, der bei einem Schnittwinkel von 0° eine Dichte repräsentiert, die kleiner als die Dichte des Fluids tatsächlich ist bzw. der bei einem Schnittwinkel von 180° eine Dichte repräsentiert, die größer als die Dichte des Fluids ist, entsprechen, beispielsweise also unter Anwendung einer einen Berechnungsterm

$$X_{\rho\_prov} = c_0 + \frac{c_1}{X_f^2}$$

(9)

enthaltenden Berechnungsvorschrift ermittelt werden. Der provisorische Dichte-Meßwert $X_{\rho\_prov}$ kann in vorteilhafter Weise zudem so berechnet bzw. die in der vorbezeichneten Berechnungsvorschrift enthaltenen Meßsystem spezifischen, mithin vorab, etwa im Zuge einer Kalibrierung ermittelbaren Koeffizienten $c_0$, $c_1$ können in vorteilhafter Weise auch so gewählt sein, daß - zumindest bei einer für das Fluid vorgegebenen Referenztemperatur - der provisorische Dichte-Meßwert und der Dichte-Meßwert bei einem Schnittwinkel von 90° gleich sind. Der Zwecks Korrektur des vorbezeichneten provisorischen Dichte-Meßwerts $X_{\rho\_prov}$ ermittelte Neigungs-Korrekturwert $X_{korr}$ kann, etwa für den erwähnten Fall, daß der Neigungs-Meßwert $X_\gamma$ einem auf Winkelgrad bezogenen Zahlenwert für den Schnittwinkel $\gamma$ entspricht, beispielsweise

basierend auf einer einen Berechnungsterm:

$$X_{korr} \sim \frac{\cos X_\gamma}{X_f^4} \tag{10}$$

bzw. einen Berechnungsterm:

$$X_{korr} = c_{10,l} \cdot g \cdot \frac{\cos X_\gamma}{X_f^4} = c_{10,l}^* \cdot \frac{\cos X_\gamma}{X_f^4} \tag{11}$$

enthaltenden Berechnungsvorschrift erfolgen. Für den anderen erwähnten Fall, daß der der Neigungs-Meßwert $X_\gamma$ einem Kosinus des Schnittwinkels $\gamma$ entspricht, kann der Neigungs-Korrekturwert $X_{korr}$ beispielsweise auch basierend auf einer einen Berechnungsterm:

$$X_{korr} \sim \frac{X_\gamma}{X_f^4} \tag{12}$$

bzw. einen Berechnungsterm:

$$X_{korr} = c_{10,l} \cdot g \cdot \frac{X_\gamma}{X_f^4} = c_{10,l}^* \cdot \frac{X_\gamma}{X_f^4} \tag{13}$$

enthaltenden Berechnungsvorschrift ermittelt werden, wobei der in der vorbezeichneten Berechnungsvorschrift enthaltene, Meßsystem spezifische Koeffizienten $c_{10,l}$, bzw. $c^*_{10,l}$ wiederum vorab, etwa im Zuge einer Kalibrierung, nämlich durch Einmessen des jeweiligen Meßsystems unter Referenzbedingungen ermittelt werden kann.

Wie aus den erwähnten Berechnungsvorschriften für die ohne weiteres ersichtlich, kann das Ermitteln des Dichte-Meßwerts, beispielsweise auch das Ermitteln des vorbezeichneten Neigungs-Korrekturwerts $X_{korr}$, u.a. auch ein wiederkehrendes Ermitteln einer Zweierpotenz $f_N^2$ der Nutz-Schwingfrequenz $f_N$ des wenigstens einen Meßrohrs und/oder ein wiederkehrendes Ermitteln einer vierten Potenz $f_N^4$ der Nutz-Schwingfrequenz $f_N$ des wenigstens einen Meßrohrs enthalten. Nämliche Zweierpotenz $f_N^2$ der Nutz-Schwingfrequenz $f_N$ bzw. nämliche vierte Potenz $f_N^4$ der Nutz-Schwingfrequenz $f_N$ kann beispielsweise jeweils auch unter Verwendung des wenigstens einen Parameter-Meßwerts $X_f$ berechnet werden.

Alternativ zu der vorbezeichneten Verwendung eines provisorischen, gleichwohl fehlerhaften Dichte-Meßwerts bzw. einer nachträglichen Korrektur nämlichen provisorischen Dichte-Meßwerts kann der Dichte-Meßwert ferner aber beispielsweise auch direkt anhand des Parameter-Meßwerts $X_f$ und des Neigungs-Meßwert $X_\gamma$ bzw. einem daraus zwischenzeitlich abgeleiteten Neigungs-Korrekturwert $X_{korr}$ ermittelt werden, beispielsweise nämlich derart, daß das Ermitteln des Dichte-Meßwerts ein Ermitteln einer Zweierpotenz $f_N^2$ der Nutz-Schwingfrequenz $f_N$ des wenigstens einen Meßrohrs, vermindert um den Neigungs-Korrekturwert $X_{korr}$, umfaßt bzw. basierend auf einer einen Berechnungsterm:

$$c_0 + \frac{c_1}{X_f^2 - X_{korr}} \tag{14}$$

enthaltenden Berechnungsvorschrift. Diese Variante birgt u.a. auch den Vorteil, daß der Neigungs-Korrekturwert $X_{korr}$ als Funktion des Neigungs-Meßwert $X_\gamma$ beschreibbar und für das jeweilige Meßsystem bereits durch Kenntnis des Neigungs-Meßwert $X_\gamma$ festegelegt ist, insb. derart daß, für den Fall, daß der Neigungs-Meßwert $X_\gamma$ einem auf Winkelgrad bezogenen Zahlenwert für den Schnittwinkel $\gamma$ entspricht, für den Neigungs-Korrekturwert $X_{korr}$:

$$X_{korr} = c_{10,II} \cdot g \cdot \cos X_\gamma = c_{10,II}^* \cdot \cos X \sim \cos X_\gamma \qquad (15)$$

bzw. für den anderen erwähnten Fall, daß der der Neigungs-Meßwert $X_\gamma$ einem Kosinus des Schnittwinkels $\gamma$ entspricht, für den Neigungs-Korrekturwert $X_{korr}$ :

$$X_{korr} = c_{10,II} \cdot g \cdot X_\gamma = c_{10,II}^* \cdot X_\gamma \sim X_\gamma \qquad (16)$$

gilt bzw. daß der Neigungs-Korrekturwert $X_{korr}$ dementsprechend berechnet werden kann. Daraus resultierend kann auch der Neigungs-Korrekturwert $X_{korr}$ gleichermaßen wie der Neigungs-Meßwert $X_\gamma$ bereits bei Inbetriebnahme des jeweiligen Meßsystems passend ermittelt und als Festwert in der jeweiligen Elektronik ME vorgehalten, beispielsweise nämlich im vorbezeichneten nicht-flüchtigen Datenspeicher EEPROM abgespeichert werden, um hernach zur Ermittlung des Dichte-Meßwerts entsprechend wieder ausgelesen werden zu können.

**Patentansprüche**

1. Verfahren zum Messen einer Dichte eines, insb. zumindest zeitweise strömenden, Fluids mittels wenigstens eines zumindest abschnittsweise, insb. U- oder V-förmig, gekrümmten Meßrohrs, welches Meßrohr dafür eingerichtet ist, von nämlichem Fluid durchströmt und währenddessen über eine Nutz-Schwinglänge, nämlich eine von einem ersten Rohrende bis zu einem zweiten Rohrende gemessene Rohrlänge, die größer als ein minimaler Abstand nämlichen zweiten Rohrendes von nämlichem ersten Rohrende ist, vibrieren gelassen zu werden, weiches Verfahren umfaßt:

   - Ermitteln eines Neigungs-Meßwerts, $X_\gamma$, nämlich eines Meßwerts für eine Neigung des wenigstens einen Meßrohrs in statischer Ruhetage relativ zu einer örtlichen Erdbeschleunigung, derart, daß der Neigungs-Meßwert, $X_\gamma$, einen Schnittwinkel, $\gamma$, zwischen einem Richtungsvektor, $\mathbf{e}_y$, einer gedachten ersten Bezugsachse (y-Achse) und einem Richtungsvektor, $\mathbf{e}_g$, einer gedachten zweiten Bezugsachse (g-Achse) repräsentiert, insb. einem auf Winkelgrad bezogenen Zahlenwert für nämlichen Schnittwinkel oder einem Zahlenwert für einen Kosinus nämlichen Schnittwinkels entspricht,

      -- wobei nämliche erste Bezugsachse senkrecht auf einer das erste Rohrende und das zweite Rohrende imaginär verbindenden, gedachten dritten Bezugsachse (z-Achse) steht und in Richtung eines am weitesten von nämlicher dritten Bezugsachse (z-Achse) entfernten Scheitelpunkts des wenigstens einen Meßrohrs in statischer Ruhelage weist, und
      - wobei nämliche zweite Bezugsachse durch einen gemeinsamen Schnittpunkt der ersten und dritten Bezugsachsen verläuft und in Lotrichtung ($\mathbf{e}_g = g/g$), nämlich in Richtung der örtlichen Erdbeschleunigung, g, weist;

      - Strömenlassen von Fluid durch das wenigstens eine Meßrohr und Vibrierenlassen nämlichen Meßrohrs, derart, daß das wenigstens eine Meßrohr zumindest anteilig Nutzschwingungen, insb. Biegeschwingungen, mit einer von der Dichte des Fluids abhängigen Nutz-Schwingfrequenz, $f_N$, ausführt;
      - Erzeugen wenigstens eines zumindest Schwingungen des wenigstens einen Meßrohrs repräsentierenden Schwingungssignals (s1), derart, daß das nämliches Schwingungssignal wenigstens einen mit der Nutz-Schwingfrequenz, $f_N$, korrespondierenden Signalparameter, insb. nämlich eine der Nutz-Schwingfrequenz, $f_N$, entsprechende Signalfrequenz, $f_1$, aufweist;
      - Verwenden des wenigstens einen Schwingungssignals (s1) zum Ermitteln wenigstens eines Parameter-Meßwerts, $X_f$, für nämlichen Signalparameter, derart, daß nämlicher Parameter-Meßwert die Nutz-Schwingfrequenz, $f_N$, des wenigstens einen Meßrohrs repräsentiert;
      - und Verwenden sowohl des wenigstens einen Parameter-Meßwerts als auch des Neigungs-Meßwerts zum Ermitteln wenigstens eines die Dichte des Fluids repräsentierenden Dichte-Meßwerts, $X_\rho$.

2. Verfahren nach einem der vorherigen Ansprüche, weiters umfassend: Verbringen des wenigstens einen Meßrohrs in eine statische Ruhelage, insb. derart, daß der Schnittwinkel, $\gamma$, größer als 0° und/oder kleiner als 180° ist.

3. Verfahren nach einem der vorherigen Ansprüche,

- wobei das Ermitteln des Dichte-Meßwerts ein Ermitteln eines Kosinus, cos $\gamma$, des Schnittwinkels, $\gamma$, umfaßt; und/oder

- wobei das Ermitteln des Dichte-Meßwerts ein Ermitteln einer Zweierpotenz, $f_N{}^2$, der Nutz-Schwingfrequenz, $f_N$, des wenigstens einen Meßrohrs umfaßt ; und/oder

- wobei das Ermitteln des Dichte-Meßwerts ein Verwenden des wenigstens einen Parameter-Meßwerts zum Ermitteln einer Zweierpotenz, $f_N{}^2$, der Nutz-Schwingfrequenz, $f_N$, des wenigstens einen Meßrohrs umfaßt; und/oder

- wobei das Ermitteln des Neigungs-Meßwerts, $X_\gamma$, ein Messen des Schnittwinkels, insb. in Winkelgrad, umfaßt; und/oder

- wobei das Ermitteln des Neigungs-Meßwerts, $X_\gamma$, ein Ermitteln eines Kosinus des Schnittwinkels umfaßt ; und/oder

- wobei der Neigungs-Meßwert, $X_\gamma$, einem, insb. auf Winkelgrad bezogenen, Zahlenwert für den Schnittwinkel entspricht; und/oder

- wobei eine Berechnungsvorschrift zur Ermittlung des Dichte-Meßwerts einen Berechnungsterm,

$$c_0 + \frac{c_1}{X_f^2 - c_{10,II} \cdot g \cdot \cos X_\gamma},$$

bzw. einen Berechnungsterm,

$$c_0 + \frac{c_1}{X_f^2 - c_{10,II} \cdot g \cdot X_\gamma},$$

enthält; und/oder

- wobei das Ermitteln des Neigungs-Meßwerts, $X_\gamma$, und das Strömenlassen von Fluid durch das wenigstens eine Meßrohr zeitgleich erfolgen; und/oder

- wobei das Ermitteln des Neigungs-Meßwerts, $X_\gamma$, und das Vibrierenlassen des wenigstens einen Meßrohrs zeitgleich erfolgen.

4. Verfahren nach einem der vorherigen Ansprüche, wobei das Ermitteln des wenigstens einen Dichte-Meßwerts das Verwenden sowohl des wenigstens einen Parameter-Meßwerts als auch des Neigungs-Meßwerts zum Ermitteln eines Neigungs-Korrekturwerts, $X_{korr}$, umfaßt, insb. derart, daß der Neigungs-Korrekturwert, $X_{korr}$, eine Abhängigkeit, $Err_f$, des Signalparameters sowohl von der Neigung des wenigstens einen Meßrohrs, insb. nämlich von einem Kosinus des Schnittwinkels, als auch einem Gesamt-Gewicht des Meßrohr mit darin befindlichem Fluid repräsentiert.

5. Verfahren nach dem vorherigen Anspruch ,

- wobei eine Berechnungsvorschrift zur Ermittlung des Dichte-Meßwerts einen Berechnungsterm,

$$c_0 + \frac{c_1}{X_f^2} + X_{korr}$$

enthält; und/oder

- wobei das Ermitteln des Neigungs-Korrekturwerts, $X_{korr}$, ein Ermitteln einer Zweierpotenz, $f_N{}^2$, der Nutz-Schwingfrequenz, $f_N$, des wenigstens einen Meßrohrs umfaßt; und/oder

- wobei das Ermitteln des Neigungs-Korrekturwerts, $X_{korr}$, ein Ermitteln einer vierten Potenz, $f_N{}^4$, der Nutz-Schwingfrequenz, $f_N$, des wenigstens einen Meßrohrs umfaßt; und/oder

- wobei der Neigungs-Korrekturwert, $X_{korr}$,

-- eine Berechnungsvorschrift:

$$X_{korr} \sim \frac{\cos X_\gamma}{X_f^4} \quad bzw.$$

-- eine Berechnungsvorschrift:

$$X_{korr} = c_{10,l} \cdot g \cdot \frac{\cos X_{\gamma}}{X_f^4} = c_{10,l}^* \cdot \frac{\cos X_{\gamma}}{X_f^4}$$

erfüllt; und/oder

- wobei der Neigungs-Korrekturwert, $X_{korr}$,

-- eine Berechnungsvorschrift:

$$X_{korr} \sim \frac{X_{\gamma}}{X_f^4} \text{ bzw.}$$

-- eine Berechnungsvorschrift:

$$X_{korr} = c_{10,l} \cdot g \cdot \frac{X_{\gamma}}{X_f^4} = c_{10,l}^* \cdot \frac{X_{\gamma}}{X_f^4}$$

erfüllt.

6. Verfahren nach dem Anspruch 4,

- wobei das Ermitteln des Neigungs-Korrekturwerts, $X_{korr}$, ein Verwenden des wenigstens einen Parameter-Meßwerts zum Ermitteln einer Zweierpotenz, $f_N^2$, der Nutz-Schwingfrequenz, $f_N$, des wenigstens einen Meßrohrs umfaßt; und/oder
- wobei das Ermitteln des Neigungs-Korrekturwerts, $X_{korr}$, das Verwenden des wenigstens einen Parameter-Meßwerts zum Ermitteln einer vierten Potenz, $f_N^4$, der Nutz-Schwingfrequenz, $f_N$, des wenigstens einen Meßrohrs umfaßt.

7. Verfahren nach einem der Ansprüche 4 bis 6, wobei das Ermitteln des Dichte-Meßwerts ein Ermitteln eines provisorischen Dichte-Meßwerts, $X_{\rho\_prov}$, der die Dichte des Fluids vorläufig repräsentiert, umfaßt, insb. derart, daß der provisorische Dichte-Meßwert bei einem Schnittwinkel von 0° eine Dichte repräsentiert, die kleiner als die Dichte des Fluids ist und/oder daß der provisorische Dichte-Meßwert bei einem Schnittwinkel von 180° eine Dichte repräsentiert, die größer als die Dichte des Fluids ist und/oder daß der provisorische Dichte-Meßwert und der Dichte-Meßwert bei einem Schnittwinkel von 90° gleich sind; und/oder daß eine Berechnungsvorschrift zur Ermittlung des provisorischen Dichte-Meßwerts einen Berechnungsterm,

$$X_{\rho\_prov} = c_0 + \frac{c_1}{X_f^2},$$

enthält; und/oder daß eine Berechnungsvorschrift zur Ermittlung des Dichte-Meßwerts einen Berechnungsterm,

$$X_{\rho\_prov} + X_{korr},$$

enthält.

8. Verfahren nach Anspruch 4, wobei der Neigungs-Korrekturwert, $X_{korr}$,

- eine Berechnungsvorschrift:

$$X_{korr} \sim \cos X_\gamma \quad bzw.$$

- eine Berechnungsvorschrift:

$$X_{korr} = c_{10,II} \cdot g \cdot \cos X_\gamma = c_{10,II}^* \cdot \cos X_\gamma$$

erfüllt.

9. Verfahren nach Anspruch 4, wobei der Neigungs-Korrekturwert, $X_{korr}$,

- eine Berechnungsvorschrift:

$$X_{korr} \sim X_\gamma \quad bzw.$$

- eine Berechnungsvorschrift:

$$X_{korr} = c_{10,II} \cdot g \cdot X_\gamma = c_{10,II}^* \cdot X_\gamma$$

erfüllt.

10. Verfahren nach einem der Ansprüche 8 bis 9, wobei das Ermitteln des Dichte-Meßwerts ein Ermitteln einer Zwei-erpotenz, $f_N^2$, der Nutz-Schwingfrequenz, $f_N$, des wenigstens einen Meßrohrs, vermindert um den Neigungs-Korrekturwert, $X_{korr}$, umfaßt, insb. derart, daß eine Berechnungsvorschrift zur Ermittlung des Dichte-Meßwerts einen Berechnungsterm,

$$c_0 + \frac{c_1}{X_f^2 - X_{korr}},$$

enthält.

11. Verfahren nach Anspruch 4 bis 10, weiters umfassend: Speichern des Neigungs-Korrekturwert, $X_{korr}$, in einem, insb. nicht-flüchtigen, Datenspeicher.

12. Verfahren nach dem vorherigen Anspruch, wobei das Verwenden des Neigungs-Korrekturwerts, $X_{korr}$, zum Ermitteln des Dichte-Meßwerts, $X_\rho$, ein Auslesen des Neigungs-Korrekturwerts, $X_{korr}$, aus dem Datenspeicher umfaßt.

13. Verfahren nach einem der vorherigen Ansprüche, weiters umfassend: Speichern des Neigungs-Meßwerts, $X_\gamma$, in einem, insb. nicht-fiüchtigen, Datenspeicher (EEPROM).

14. Verfahren nach dem vorherigen Anspruch, wobei das Verwenden des Neigungs-Meßwerts zum Ermitteln des Dichte-Meßwerts, $X_\rho$, ein Auslesen des Neigungs-Meßwerts aus dem Datenspeicher (EEPROM) umfaßt.

15. Verfahren nach einem der vorherigen Ansprüche,

- wobei der Neigungs-Meßwert, $X_\gamma$, eine Berechnungsvorschrift:

$$\cos X_\gamma = \frac{e_\gamma \circ e_g}{|e_\gamma| \cdot |e_g|} \quad erfüllt;$$

und/oder
- wobei der Neigungs-Meßwert, $X_\gamma$, eine Berechnungsvorschrift:

$$\cos X_\gamma = \frac{e_z \circ e_h}{|e_z| \cdot |e_h|} \cdot \frac{e_y \circ e_v}{|e_y| \cdot |e_v|}$$

erfüllt, worin ein Richtungsvektor $e_h$ eine Berechnungsvorschrift:

$$e_h = \frac{e_g \times (e_z \times e_g)}{|e_g \times (e_z \times e_g)|} = \frac{e_g \times (e_z \times e_g)}{|e_g| \cdot |e_z \times e_g|}$$

und ein Richtungsvektor $\mathbf{e_v}$ eine einen Richtungsvektor, $e_x$, einer gedachten vierten Bezugsachse x (x-Achse) enthaltende Berechnungsvorschrift:

$$e_v = \frac{e_g \circ e_x}{|e_x|^2} \cdot e_x + \frac{e_g \circ e_y}{|e_y|^2} \cdot e_y$$

erfüllen, wobei nämliche gedachte vierte Bezugsachse x sowohl senkrecht auf der gedachten ersten Bezugsachse (y-Achse) als auch senkrecht auf der gedachten dritten Bezugsachse (z-Achse) steht.

**16.** Verfahren nach einem der Ansprüche 1 bis 14,

- wobei der Neigungs-Meßwert, $X_\gamma$, einem Zahlenwert für einen Kosinus des Schnittwinkels entspricht; und/oder
- wobei der Neigungs-Meßwert, $X_\gamma$, eine Berechnungsvorschrift:

$$X_\gamma = \frac{e_y \circ e_g}{|e_y| \cdot |e_g|} \text{ erfüllt;}$$

und/oder
- wobei der Neigungs-Meßwert, $X_\gamma$, eine Berechnungsvorschrift:

$$X_\gamma = \frac{e_z \circ e_h}{|e_z| \cdot |e_h|} \cdot \frac{e_y \circ e_v}{|e_y| \cdot |e_v|}$$

erfüllt, worin ein Richtungsvektor $e_h$ eine Berechnungsvorschrift:

$$e_h = \frac{e_g \times (e_z \times e_g)}{|e_g \times (e_z \times e_g)|} = \frac{e_g \times (e_z \times e_g)}{|e_g| \cdot |e_z \times e_g|}$$

und ein Richtungsvektor $\mathbf{e_v}$ eine einen Richtungsvektor, $e_x$, einer gedachten vierten Bezugsachse x (x-Achse) enthaltende Berechnungsvorschrift:

$$e_v = \frac{e_g \circ e_x}{|e_x|^2} \cdot e_x + \frac{e_g \circ e_y}{|e_y|^2} \cdot e_y$$

erfüllen, wobei nämliche gedachte vierte Bezugsachse x sowohl senkrecht auf der gedachten ersten Bezugsachse (y-Achse) als auch senkrecht auf der gedachten dritten Bezugsachse (z-Achse) steht.

17. Verfahren nach einem der vorherigen Ansprüche, weiters umfassend: Verwenden eines, insb. bezüglich des wenigstens einen Meßrohrs, mithin bezüglich der ersten und dritten Bezugsachsen dauerhaft in einer festen Lagebeziehung stationierten und/oder uniaxialen, nämlich genau eine Meßachse aufweisenden, Neigungssensors zum Ermitteln des Neigungs-Meßwerts.

18. Verfahren nach dem vorherigen Anspruch,

   - wobei der Neigungssensor zwei oder mehr zueinander senkrechte Meßachsen aufweist; und/oder
   - wobei der Neigungssensor so angeordnet ist, daß eine Meßachse parallel zur ersten Bezugsachse (y-Achse) ist, insb. mit der ersten Bezugsachse (y-Achse) koinzidiert.

19. Verfahren nach einem der vorherigen Ansprüche,

   - wobei dem wenigstens einen Meßrohr ein lediglich zwei Schwingungsknoten, von denen ein erster Schwingungsknoten im ersten Rohrende und ein zweiter Schwingungsknoten im zweiten Rohrende verortet sind, mithin ein einen einzigen Schwingungsbauch aufweisender Biegeschwingungsgrundmode innewohnt, und wobei die Nutzschwingungen Schwingungen des wenigstens einen Meßrohrs im Biegeschwingungsgrundmode entsprechen; und/oder
   - wobei am wenigstens einen Meßrohr eine Komponente, insb. eine Spule oder ein Permanentmagnet, eines einem aktiven Anregen von Schwingungen nämlichen Meßrohrs dienlichen elektro-mechanischen, insb. elektrodynamischen, Schwingungserregers angebracht ist, derart, daß die gedachte erste Bezugsachse bzw. eine Verlängerung davon den Schwingungserreger bzw. nämliche Komponente des Schwingungserregers imaginär schneidet.

## Claims

1. Procedure for measuring a density of a fluid, particularly a fluid flowing at least intermittently, using at least a measuring tube which is curved at least partially, particularly in the shape of a U or V, said measuring tube being designed to have said fluid flow through it, and to be excited to vibrate, as the fluid flows, over a useful vibration length, namely a tube length that is measured from a first pipe end to a second pipe end, said length being greater than a minimum distance of said second tube end from said first tube end, said procedure comprising:

   - Determination of an inclination measured value, $X_\gamma$, namely a measured value for an inclination of the at least one measuring tube in a static rest position relative to a local gravitational acceleration, in such a way that the inclination measured value, $X_\gamma$ represents an angle of intersection, $\gamma$, between a directional vector, $e_y$, of an imaginary first reference axis (y-axis) and a directional vector, $e_g$, of an imaginary second reference axis (g-axis), particularly corresponding to a numerical value, in relation to angle degrees, for said first angle of intersection or a numerical value for a cosine of said angle of intersection,

       -- wherein said first reference axis is perpendicular to an imaginary third reference axis (z-axis) connecting in an imaginary manner the first tube end and the second tube end, and extends in the direction of a vertex of the at least one measuring tube in the static rest position, said vertex being as far away as possible from said third reference axis (z-axis), and
       -- wherein said second reference axis passes through a common point of intersection of the first and third reference axes and extends in the vertical direction ($e_g = g/g$), namely in the direction of the local gravitational acceleration, g;

   - Fluid is allowed to flow through the at least one measuring tube and said measuring tube is made to vibrate in such a way that the at least one measuring tube executes, at least partially, useful vibrations, particularly bending vibrations, at a useful vibration frequency, $f_N$, which depends on the density of the fluid;
   - Generation of at least one vibration signal (s1) representing at least vibrations of the at least one measuring tube, in such a way that said vibration signal has at least one signal parameter that corresponds to the useful vibration frequency, $f_N$, particularly a signal frequency, $f_1$, corresponding to the useful vibration frequency, $f_N$;
   - Use of the at least one vibration signal (s1) to determine at least one parameter measured value, $X_f$, for said signal parameter, in such a way that said parameter measured value represents the useful vibration frequency, $f_N$, of the at least one measuring tube;
   - And use of both the at least one parameter measured value and the inclination measured value to determine at least one density measured value, $X_\rho$, representing the density of the fluid.

2. Procedure as claimed in one of the previous claims, further comprising: placing of the at least one measuring tube in a static rest position, particularly in such a way that the angle of intersection, $\gamma$, is greater than 0° and/or less than 180°.

3. Procedure as claimed in one of the previous claims,

- wherein the determination of the density measured value involves a determination of a cosine, $\cos \gamma$, of the angle of intersection $\gamma$; and/or
- wherein the determination of the density measured value involves a determination of a power of two, $f_N^2$, of the useful vibration frequency, $f_N$, of the at least one measuring tube; and/or
- wherein the determination of the density measured value involves a use of the at least one parameter measured value to determine a power of two, $f_N^2$, of the useful vibration frequency, $f_N$, of the at least one measuring tube; and/or
- wherein the determination of the inclination measured value, $X_\gamma$, comprises a measurement of the angle of intersection, particularly in angle degrees; and/or
- wherein the determination of the inclination measured value, $X_\gamma$, comprises a determination of a cosine of the angle of intersection; and/or
- wherein the inclination measured value, $X_\gamma$, corresponds to a numerical value for the angle of intersection, particularly in relation to angle degrees; and/or
- wherein a calculation rule for determining the density measured value contains a calculation term,

$$c_0 + \frac{c_1}{X_f^2 - c_{10,ll} \cdot g \cdot \cos X_\gamma},$$

or a calculation term,

$$c_0 + \frac{c_1}{X_f^2 - c_{10,ll} \cdot g \cdot X_\gamma};$$

and/or
- wherein the inclination measured value, $X_\gamma$, is determined and fluid is allowed to flow through the at least one measuring tube simultaneously; and/or
- wherein the inclination measured value, $X_\gamma$, is determined and the at least one measuring tube is made to vibrate simultaneously.

4. Procedure as claimed in one of the previous claims, wherein the determination of the at least one density measured value comprises the use both of the at least one parameter measured value and of the inclination measured value to determine an inclination correction value, $X_{korr}$, particularly in such a way that the inclination correction value, $X_{korr}$, represents a dependence, $Err_f$, of the signal parameter on both the inclination of the at least one measuring tube, particularly of a cosine of the angle of intersection, and of a total weight of the measuring tube with fluid contained therein.

5. Procedure as claimed in the previous claim,

- wherein a calculation rule for determining the density measured value contains a calculation term,

$$c_0 + \frac{c_1}{X_f^2} + X_{korr};$$

and/or
- wherein the determination of the inclination correction value, $X_{korr}$, comprises a determination of a power of two, $f_N^2$, of the useful vibration frequency, $f_N$, of the at least one measuring tube; and/or
- wherein the determination of the inclination correction value, $X_{korr}$, comprises a determination of a power of four, $f_N^4$, of the useful vibration frequency, $f_N$, of the at least one measuring tube; and/or
- wherein the inclination correction value, $X_{korr}$, satisfies

-- a calculation rule:

$$X_{korr} \sim \frac{\cos X_{\gamma}}{X_f^4}$$

or
-- a calculation rule:

$$X_{korr} = c_{(q)} \cdot g \cdot \frac{\cos X_{\gamma}}{X_f^4} = c'_{(q)} \cdot \frac{\cos X_{\gamma}}{X_f^4}$$

and/or

- wherein the inclination correction value, $X_{korr}$, satisfies

-- a calculation rule:

$$X_{korr} \sim \frac{X_{\gamma}}{X_f^4}$$

or
-- a calculation rule:

$$X_{korr} = c_{(q)} \cdot g \cdot \frac{X_{\gamma}}{X_f^4} = c'_{(q)} \cdot \frac{X_{\gamma}}{X_f^4} \quad .$$

**6.** Procedure as claimed in Claim 4,

- wherein the determination of the inclination correction value, $X_{korr}$, comprises a use of the at least one parameter measured value to determine a power of two, $f_N^2$, of the useful vibration frequency, $f_N$, of the at least one measuring tube; and/or
- wherein the determination of the inclination correction value, $X_{korr}$, comprises the use of the at least one parameter measured value to determine a power of four, $f_N^4$, of the useful vibration frequency, $f_N$, of the at least one measuring tube.

**7.** Procedure as claimed in one of the Claims 4 to 6, wherein the determination of the density measured value comprises a determination of a provisional density measured value, $X_{\rho\_prov}$, which provisionally represents the density of the fluid, particularly in such a way that the provisional density measured value at an angle of 0° represents a density which is less than the density of the fluid and/or that the provisional density measured value at an angle of 180° represents a density that is greater than the density of the fluid and/or that the provisional density measured value and the density measured value at an angle of intersection of 90° are identical; and/or that a calculation rule for determining the provisional density measured value contains a calculation term,

$$X_{\rho\_prov} = c_0 + \frac{c_1}{X_f^2} \,,$$

and/or that a calculation rule for determining the density measured value contains a calculation term,

$$X_{\rho\_prov} + X_{korr} \, ,$$

8. Procedure as claimed in Claim 4, wherein the inclination correction value, $X_{korr}$, satisfies

    - a calculation rule:

$$X_{korr} \sim \cos X_\gamma \, ,$$

or
- a calculation rule:

$$X_{korr} = c_{10,I} \cdot g \cdot \cos X_\gamma = c^*_{10,I} \cdot \cos X_\gamma \, .$$

9. Procedure as claimed in Claim 4, wherein the inclination correction value, $X_{korr}$, satisfies

    - a calculation rule:

$$X_{korr} \sim X_\gamma$$

or
- a calculation rule:

$$X_{korr} = c_{10,I} \cdot g \cdot X_\gamma = c^*_{10,I} \cdot X_\gamma \, .$$

10. Procedure as claimed in one of the Claims 8 to 9, wherein the determination of the density measured value comprises a determination of a power of two, $f_N^2$, of the useful vibration frequency, $f_N$, of the at least one measuring tube, reduced by the inclination correction value, $X_{korr}$, particularly in such a way that a calculation rule for determining the density measured value contains a calculation term,

$$c_0 + \frac{c_1}{X_f^2 - X_{korr}} \, ,$$

11. Procedure as claimed in Claim 4 to 10, further comprising: the storage of the inclination correction value, $X_{korr}$, in a data memory, particularly a non-volatile memory.

12. Procedure as claimed in the previous claim, wherein the use of the inclination correction value, $X_{korr}$, to determine the density measured value, $X_\rho$, comprises reading the inclination correction value, $X_{korr}$, out of the data memory.

13. Procedure as claimed in one of the previous claims, further comprising: the storage of the inclination measured value, $X_\gamma$, in a data memory (EEPROM), particularly a non-volatile memory.

14. Procedure as claimed in the previous claim, wherein the use of the inclination measured value to determine the density measured value, $X_\rho$, comprises reading the inclination measured value out of the data memory (EEPROM).

15. Procedure as claimed in one of the previous claims,

    - wherein the inclination measured value, $X_\gamma$, satisfies a calculation rule

$$\cos X_{\gamma} = \frac{e_{\gamma} \circ e_{z}}{|e_{\gamma}| \cdot |e_{z}|} ;$$

and/or
- wherein the inclination measured value, $X_{\gamma}$, satisfies a calculation rule

$$\cos X_{\gamma} = \frac{e_{z} \circ e_{h}}{|e_{z}| \cdot |e_{h}|} \cdot \frac{e_{\gamma} \circ e_{v}}{|e_{\gamma}| \cdot |e_{v}|}$$

where a directional vector $e_h$ satisfies a calculation rule:

$$e_{h} = \frac{e_{z} \times (e_{z} \times e_{x})}{|e_{z} \times (e_{z} \times e_{x})|} = \frac{e_{z} \times (e_{z} \times e_{x})}{|e_{z}| \cdot |e_{z} \times e_{x}|}$$

and a directional vector, $e_v$, satisfies a calculation rule containing a directional vector, $e_x$, of an imaginary fourth reference axis x (x-axis) :

$$e_{v} = \frac{e_{h} \circ e_{x}}{|e_{x}|^{2}} \cdot e_{x} + \frac{e_{z} \circ e_{y}}{|e_{y}|^{2}} \cdot e_{y}$$

wherein said imaginary fourth reference axis x is both perpendicular to the imaginary first reference axis (y-axis) and perpendicular to the imaginary third reference axis (z-axis).

16. Procedure as claimed in one of the Claims 1 to 14,

- wherein the inclination measured value, $X_{\gamma}$, corresponds to a numerical value for a cosine of the angle of intersection, and/or
- wherein the inclination measured value, $X_{\gamma}$, satisfies a calculation rule:

$$X_{\gamma} = \frac{e_{\gamma} \circ e_{z}}{|e_{\gamma}| \cdot |e_{z}|}$$

and/or
- wherein the inclination measured value, $X_{\gamma}$, satisfies a calculation rule:

$$X_{\gamma} = \frac{e_{z} \circ e_{h}}{|e_{z}| \cdot |e_{h}|} \cdot \frac{e_{\gamma} \circ e_{v}}{|e_{\gamma}| \cdot |e_{v}|}$$

where a directional vector, $e_h$, satisfies a calculation rule:

$$e_{h} = \frac{e_{z} \times (e_{z} \times e_{x})}{|e_{z} \times (e_{z} \times e_{x})|} = \frac{e_{z} \times (e_{z} \times e_{x})}{|e_{z}| \cdot |e_{z} \times e_{x}|}$$

and a directional vector, $e_v$, satisfies a calculation rule containing a directional vector, $e_x$, of an imaginary fourth reference axis x (x-axis):

$$e_x = \frac{e_g \times (e_z \times e_g)}{|e_g \times (e_z \times e_g)|} = \frac{e_g \times (e_z \times e_g)}{|e_g| \cdot |e_z \times e_g|}$$

wherein said imaginary fourth reference axis x is both perpendicular to the imaginary first reference axis (y-axis) and perpendicular to the imaginary third reference axis (z-axis).

17. Procedure as claimed in one of the previous claims, further comprising: the use of an inclination sensor for the purpose of determining an inclination measured value, said sensor permanently having a fixed locational relationship particularly in relation to the at least one measuring tube, and therefore in relation to the first and third reference axes and/or being uniaxial, notably having precisely one measurement axis.

18. Procedure as claimed in the previous claim,

- wherein the inclination sensor has two or more measurement axes that are perpendicular to one another; and/or
- wherein the inclination sensor is arranged in such a way that one measurement axis is parallel to the first reference axis (y-axis); particularly coincides with the first reference axis (y-axis).

19. Procedure as claimed in one of the previous claims,

- wherein the at least one measuring tube is **characterized by** a bending vibration fundamental mode having only two vibration nodes, of which a first vibration node is located in the first tube end and a second vibration node is located in the second tube end, and therefore having a single antinode, and wherein the useful vibrations correspond to vibrations of the at least one measuring tube in the bending vibration fundamental mode; and/or
- wherein a component is mounted on the at least one measuring tube, said component particularly being a coil or a permanent magnet, of an electromechanical, particularly electrodynamic, vibration exciter, designed to actively excite vibrations of said measuring tube in such a way that the imaginary first reference axis or an extension thereof intersects in an imaginary manner the vibration exciter or said component of the vibration exciter.

## Revendications

1. Procédé destiné à la mesure d'une densité d'un fluide, notamment au moins partiellement en écoulement, au moyen d'au moins un tube de mesure cintré au moins partiellement, notamment en forme de U ou de V, lequel tube de mesure est conçu de telle sorte à être parcouru par le fluide et excité en vibrations sur une longueur de vibration utile, notamment une longueur de tube mesurée à partir d'une première extrémité de tube jusqu'à une deuxième extrémité de tube, laquelle longueur est supérieure à un distance minimale de la deuxième extrémité de tube par rapport à la première extrémité de tube, lequel procédé comprend :

- Détermination d'une valeur mesurée d'inclinaison, $X_\gamma$, notamment d'une valeur mesurée pour une inclinaison de l'au moins un tube de mesure dans une position de repos statique par rapport à une accélération de la pesanteur locale, de telle sorte que la valeur mesurée d'inclinaison, $X_\gamma$ représente un angle d'intersection, $\gamma$, entre un vecteur directionnel, $e_y$, d'un premier axe de référence imaginaire (axe y) et d'un vecteur directionnel, $e_g$, d'un deuxième axe de référence imaginaire (axe g), correspondant notamment à une valeur numérique en degrés d'angle pour l'angle d'intersection ou une valeur numérique pour un cosinus de l'angle d'intersection,

-- Le premier axe de référence étant perpendiculaire à un troisième axe de référence imaginaire (axe z) reliant de façon imaginaire la première extrémité de tube et la deuxième extrémité de tube, et pointant en direction d'un sommet de l'au moins un tube de mesure en position de repos statique, lequel sommet est le plus éloigné du troisième axe de référence (axe z), et
-- Le deuxième axe de référence passant par un point d'intersection commun du premier et du troisième axes de référence et s'étendant en direction verticale ($e_g = g/g$), notamment en direction de l'accélération de la pesanteur locale, g ;

- Mise en écoulement du fluide à travers l'au moins un tube de mesure et mise en vibration du tube de mesure de telle sorte que l'au moins un tube de mesure exécute au moins partiellement des vibrations utiles, notamment des vibrations de flexion, à une fréquence de vibration utile, $f_N$, dépendant de la densité du fluide ;

- Génération d'au moins un signal de vibration (s1) représentant au minimum les vibrations de l'au moins un tube de mesure, de telle sorte que le signal de vibration présente au moins un paramètre de signal correspondant à la fréquence de vibration utile, $f_N$, notamment une fréquence de signal, $f_1$, correspondant à la fréquence de vibration utile, $f_N$ ;

- Utilisation de l'au moins un signal de vibration (s1) pour la détermination d'au moins une valeur mesurée, $X_f$, pour le paramètre de signal, de telle sorte que la valeur mesurée de paramètre représente la fréquence de vibration utile, $f_N$, de l'au moins un tube de mesure ;

- Et utilisation à la fois de l'au moins une valeur mesurée de paramètre et de la valeur mesurée d'inclinaison pour la détermination d'au moins une valeur mesurée de densité, $X_\rho$, représentant la densité du fluide.

2. Procédé selon l'une des revendications précédentes, comprenant en outre : mise de l'au moins un tube de mesure dans une position de repos statique, notamment de telle sorte que l'angle d'intersection, $\gamma$, soit supérieur à 0° et/ou inférieur à 180°.

3. Procédé selon l'une des revendications précédentes,

- pour lequel la détermination de la valeur mesurée de densité comprend une détermination d'un cosinus, $\cos \gamma$, de l'angle d'intersection $\gamma$ ; et/ou

- pour lequel la détermination de la valeur mesurée de densité comprend une détermination d'une puissance de deux, $f_N{}^2$, de la fréquence de vibration utile, $f_N$, de l'au moins un tube de mesure ; et/ou

- pour lequel la détermination de la valeur mesurée de densité comprend une utilisation de l'au moins une valeur mesurée de paramètre pour la détermination d'une puissance de deux, $f_N{}^2$, de la fréquence de vibration utile, $f_N$, de l'au moins un tube de mesure ; et/ou

- pour lequel la détermination de la valeur mesurée d'inclinaison, $X_\gamma$, comprend une mesure de l'angle d'intersection, notamment en degrés d'angle ; et/ou

- pour lequel la détermination de la valeur mesurée d'inclinaison, $X_\gamma$, comprend une détermination d'un cosinus de l'angle d'intersection ; et/ou

- pour lequel la valeur mesurée d'inclinaison, $X_\gamma$, correspond à une valeur numérique pour l'angle d'intersection, notamment en degrés d'angle ; et/ou

- pour lequel une règle de calcul pour la détermination de la valeur mesurée de densité contient un terme de calcul,

$$c_0 + \frac{c_1}{X_f^2 - c_{10,1} \cdot g \cdot \cos X_\gamma},$$

ou un terme de calcul,

$$c_0 + \frac{c_1}{X_f^2 - c_{10,1} \cdot g \cdot X_\gamma},$$

;

et/ou

- pour lequel la détermination de la valeur mesurée d'inclinaison, $X_\gamma$, et la mise en écoulement du fluide à travers l'au moins un tube de mesure s'effectuent simultanément ; et/ou

- pour lequel la détermination de la valeur mesurée d'inclinaison, $X_\gamma$, et la mise en vibration de l'au moins un tube de mesure s'effectuent simultanément.

4. Procédé selon l'une des revendications précédentes, pour lequel la détermination de l'au moins une valeur mesurée de densité comprend l'utilisation à la fois de l'au moins une valeur mesurée de paramètre et de la valeur mesurée d'inclinaison pour la détermination d'une valeur de correction d'inclinaison, $X_{korr}$, notamment de telle sorte que la valeur de correction d'inclinaison, $X_{korr}$, représente une dépendance, $Err_f$, du paramètre de signal à la fois de l'inclinaison de l'au moins un tube de mesure, notamment d'un cosinus de l'angle d'intersection, et d'un poids total du tube de mesure dans lequel se trouve le fluide.

5. Procédé selon la revendication précédente,

   - pour lequel une règle de calcul pour la détermination de la valeur mesurée de densité contient un terme de calcul,

$$c_0 + \frac{c_1}{X_f^2} + X_{korr} \; ;$$

   et/ou
   - pour lequel la détermination de la valeur de correction d'inclinaison, $X_{korr}$, comprend une détermination d'une puissance de deux, $f_N^2$, de la fréquence de vibration utile, $f_N$, de l'au moins un tube de mesure ; et/ou
   - pour lequel la détermination de la valeur de correction d'inclinaison, $X_{korr}$, comprend une détermination d'une puissance de quatre, $f_N^4$, de la fréquence de vibration utile, $f_N$, de l'au moins un tube de mesure ; et/ou
   - pour lequel la valeur de correction d'inclinaison, $X_{korr}$, satisfait à

      -- une règle de calcul :

$$X_{korr} \sim \frac{\cos X_\gamma}{X_f^4}$$

      ou
      -- une règle de calcul :

$$X_{korr} = c_{10J} \cdot g \cdot \frac{\cos X_\gamma}{X_f^4} = c_{10J}^{\cdot} \cdot \frac{\cos X_\gamma}{X_f^4}$$

   et/ou

   - pour lequel la valeur de correction d'inclinaison, $X_{korr}$, satisfait à

      -- une règle de calcul :

$$X_{korr} \sim \frac{X_\gamma}{X_f^4}$$

      ou
      -- une règle de calcul :

$$X_{korr} = c_{10J} \cdot g \cdot \frac{X_\gamma}{X_f^4} = c_{10J}^{\cdot} \cdot \frac{X_\gamma}{X_f^4} \; .$$

6. Procédé selon la revendication 4,

   - pour lequel la détermination de la valeur de correction d'inclinaison, $X_{korr}$, comprend une utilisation de l'au moins une valeur mesurée de paramètre pour la détermination d'une puissance de deux, $f_N^2$, de la fréquence de vibration utile, $f_N$, de l'au moins un tube de mesure ; et/ou
   - pour lequel la détermination de la valeur de correction d'inclinaison, $X_{korr}$, comprend une utilisation de l'au moins une valeur mesurée de paramètre pour la détermination d'une puissance de quatre, $f_N^4$, de la fréquence de vibration utile, $f_N$, de l'au moins un tube de mesure.

7. Procédé selon l'une des revendications 4 à 6, pour lequel la détermination de la valeur mesurée de densité comprend un détermination d'une valeur mesurée de densité provisoire, $X_{\rho\_prov}$, qui représente provisoirement la densité du fluide, notamment de telle sorte que la valeur mesurée de densité provisoire représente, pour un angle d'intersection de 0°, une densité inférieure à la densité du fluide et/ou de telle sorte que la valeur mesurée de densité provisoire pour un angle d'intersection de 180° représente une densité supérieure à la densité du fluide et/ou de telle sorte que la valeur mesurée de densité provisoire et la valeur mesurée de densité sont égales pour un angle d'intersection de 90° ; et/ou de telle sorte qu'une règle de calcul contient, pour la détermination de la valeur mesurée de densité provisoire, un terme de calcul,

$$X_{\rho\_prov} = c_0 + \frac{c_1}{X_f^2},$$

et/ou de telle sorte qu'une règle de calcul pour la détermination de la valeur mesurée de densité contient un terme de calcul,

$$X_{\rho\_prov} + X_{korr},$$

8. Procédé selon la revendication 4, pour lequel la valeur de correction d'inclinaison, $X_{korr}$, satisfait à

   - une règle de calcul :

   $$X_{korr} \sim \cos X_\gamma,$$

   ou
   - une règle de calcul :

   $$X_{korr} = c_{10,II} \cdot g \cdot \cos X_\gamma = c_{10,II}^* \cdot \cos X_\gamma.$$

9. Procédé selon la revendication 4, pour lequel la valeur de correction d'inclinaison, $X_{korr}$, satisfait à

   - une règle de calcul :

   $$X_{korr} \sim X_\gamma$$

   ou
   - une règle de calcul :

   $$X_{korr} = c_{10,II} \cdot g \cdot X_\gamma = c_{10,II}^* \cdot X_\gamma.$$

10. Procédé selon l'une des revendications 8 à 9, pour lequel la détermination de la valeur mesurée de densité comprend une détermination de la puissance de deux, $f_N^2$, de la fréquence de vibration utile, $f_N$, de l'au moins un tube de mesure, diminuée de la valeur de correction d'inclinaison, $X_{korr}$, notamment de telle sorte qu'une règle de calcul pour la détermination de la valeur mesurée de densité comprend un terme de calcul,

$$c_0 + \frac{c_1}{X_\gamma^2 - X_{korr}}\,,\ .$$

**11.** Procédé selon la revendication 4 à 10, comprenant en outre l'enregistrement de la valeur de correction d'inclinaison, $X_{korr}$, dans une mémoire de données, notamment non volatile.

**12.** Procédé selon la revendication précédente, pour lequel l'utilisation de la valeur de correction d'inclinaison, $X_{korr}$, pour la détermination de la valeur mesurée de densité, $X_\rho$, comprend une lecture de la valeur de correction d'inclinaison, $X_{korr}$, à partir de la mémoire de données.

**13.** Procédé selon l'une des revendications précédentes, comprenant en outre l'enregistrement de la valeur mesurée d'inclinaison, $X_\gamma$, dans une mémoire de données (EEPROM), notamment non volatile.

**14.** Procédé selon la revendication précédente, pour lequel l'utilisation de la valeur mesurée d'inclinaison pour la détermination de la valeur mesurée de densité, $X_\rho$, comprend une lecture de la valeur mesurée d'inclinaison à partir de la mémoire de données (EEPROM).

**15.** Procédé selon l'une des revendications précédentes,

- pour lequel la valeur mesurée d'inclinaison, $X_\gamma$, satisfait à une règle de calcul

$$\cos X_\gamma = \frac{e_y \circ e_z}{|e_y| \cdot |e_z|}\ ;$$

et/ou
- pour lequel la valeur mesurée d'inclinaison, $X_\gamma$, satisfait à une règle de calcul

$$\cos X_\gamma = \frac{e_z \circ e_h}{|e_z| \cdot |e_h|} \cdot \frac{e_y \circ e_v}{|e_y| \cdot |e_v|}$$

où un vecteur directionnel $e_h$ satisfait à une règle de calcul :

$$e_h = \frac{e_z \times (e_y \times e_z)}{|e_z \times (e_y \times e_z)|} = \frac{e_z \times (e_y \times e_z)}{|e_z| \cdot |e_y \times e_z|}$$

et un vecteur directionnel, $e_v$, satisfait à une règle de calcul contenant un vecteur directionnel, $e_x$, d'un quatrième axe de référence x (axe x) :

$$e_v = \frac{e_z \circ e_x}{|e_x|^2} \cdot e_x + \frac{e_z \circ e_y}{|e_y|^2} \cdot e_y$$

le quatrième axe de référence imaginaire x étant à la fois perpendiculaire au premier axe de référence imaginaire (axe y) et perpendiculaire au troisième axe de référence (axe z).

**16.** Procédé selon l'une des revendications 1 à 14,

- pour lequel la valeur mesurée d'inclinaison, $X_\gamma$, correspond à une valeur numérique pour un cosinus de l'angle d'intersection, et/ou
- pour lequel la valeur mesurée d'inclinaison, $X_\gamma$, satisfait à une règle de calcul :

$$X_\gamma = \frac{e_y \circ e_z}{|e_y| \cdot |e_z|}$$

- pour lequel la valeur mesurée d'inclinaison, $X_\gamma$, satisfait à une règle de calcul :

$$X_\gamma = \frac{e_z \circ e_h}{|e_z| \cdot |e_h|} \cdot \frac{e_y \circ e_v}{|e_y| \cdot |e_v|}$$

où un vecteur directionnel, $e_h$, satisfait à une règle de calcul :

$$e_h = \frac{e_z \times (e_z \times e_z)}{|e_z \times (e_z \times e_z)|} = \frac{e_z \times (e_z \times e_z)}{|e_z| \cdot |e_z \times e_z|}$$

et un vecteur directionnel, $e_v$, satisfait à une règle de calcul contenant un vecteur directionnel, $e_x$, d'un quatrième axe de référence x (axe x) :

$$e_h = \frac{e_z \times (e_z \times e_z)}{|e_z \times (e_z \times e_z)|} = \frac{e_z \times (e_z \times e_z)}{|e_z| \cdot |e_z \times e_z|}$$

le quatrième axe de référence imaginaire x étant à la fois perpendiculaire au premier axe de référence imaginaire (axe y) et perpendiculaire au troisième axe de référence (axe z).

**17.** Procédé selon l'une des revendications précédentes, comprenant en outre l'utilisation, pour la détermination de la valeur mesurée d'inclinaison, d'un capteur d'inclinaison présentant durablement une relation de position fixe par rapport à l'au moins un tube de mesure, et donc par rapport au premier et au troisième axes de référence et/ou uniaxial, notamment présentant exactement un axe de mesure.

**18.** Procédé selon la revendication précédente,

- pour lequel le capteur d'inclinaison présente deux axes de mesure ou plus, mutuellement perpendiculaires ; et/ou
- pour lequel le capteur d'inclinaison est disposé de telle manière qu'un axe de mesure est parallèle au premier axe de référence (axe y) ; notamment coïncide avec le premier axe de référence (axe y).

**19.** Procédé selon l'une des revendications précédentes,

- pour lequel l'au moins un tube de mesure est **caractérisé par** un mode fondamental de vibration de flexion comportant uniquement deux noeuds de vibration, noeuds parmi lesquels un premier noeud de vibration est situé dans une première extrémité de tube et un deuxième noeud de vibration dans une deuxième extrémité de tube, présentant par conséquent un unique ventre de vibration, et pour lequel les vibrations utiles correspondent, en mode fondamental de vibration de flexion, aux vibrations de l'au moins un tube de mesure ; et/ou
- pour lequel est monté, sur l'au moins un tube de mesure, un composant, notamment une bobine ou un aimant permanent, d'un excitateur de vibration électromécanique, notamment électrodynamique, destiné à une excitation active en vibrations du tube de mesure, de telle sorte que le premier axe de référence imaginaire, ou une prolongation de celui-ci, coupe de façon imaginaire l'excitateur de vibration ou le composant de l'excitateur de vibration.

Fig. 1

*Fig. 2*

Fig. 3

*Fig. 4*

*Fig. 5*

*Fig. 6*

**EP 3 241 011 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080229846 A
- US 20140060154 A
- US 20100236338 A
- US 20100242623 A
- US 20100242624 A
- US 5602345 A
- US 5796011 A
- US 6513393 B
- US 6840109 B
- US 6920798 B
- US 7017424 B
- US 7360451 B
- US 6666098 B
- US 4801897 A
- US 6311136 B
- US 4777833 A
- US 4879911 A
- US 5009109 A
- US 5024104 A
- US 5050439 A
- US 5804741 A
- US 5869770 A
- US 6073495 A
- US 6311136 A
- US 7284449 B
- US 6910366 B
- US 5576500 A
- US 6651513 B
- WO 2013092105 A